# EUROPEAN PATENT APPLICATION

(11) **EP 4 600 290 A1**
(43) Date of publication of application: **13.08.2025**
(21) Application number: 23874587.1
(22) Date of filing: 05.09.2023
(51) Int. Cl.: C08G 65/336

(54) **FLUOROPOLYETHER GROUP-CONTAINING POLYMER**

(30) Priority: 05.10.2022 JP 2022160728
(71) Applicant: SHIN-ETSU CHEMICAL CO., LTD., Tokyo 1000005 (JP)
(72) Inventor: SHIMADA, Takanori, Annaka-shi, Gunma 379-0224 (JP); MORI, Seiya, Annaka-shi, Gunma 379-0224 (JP); SAKOH, Ryusuke, Annaka-shi, Gunma 379-0224 (JP)
(74) Representative: Ter Meer Steinmeister & Partner
(86) International application number: PCT/JP2023/032316
(87) International publication number: WO 2024/075458

(57) **Abstract**

The fluoropolyether group-containing polymer represented by formula (1) can be, after introduction of a reactive functional group, a polymer containing a polysiloxane structure (particularly a branched or cyclic polysiloxane structure) on the connecting group between the fluoropolyether group and the reactive functional group and can be a water-repellent and oil-repellent treatment agent that can impart an excellent characteristic to a surface of a cured substance. 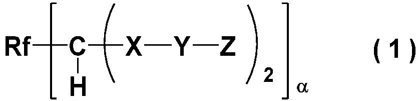 (In the formula: Rf is a monovalent or divalent fluoropolyether group-containing polymer residue; X is independently a single bond or divalent heteroatom; Y is independently a 1-20 carbon divalent hydrocarbon group that may comprise one or more types selected from oxygen atom, nitrogen atom, silicon atom, and sulfur atom; Z is independently a monovalent organopolysiloxane residue comprising at least one silicon-hydrogen bond (SiH group) on the end, and may form a cyclic structure. α is 1 or 2.)

## Description

### TECHNICAL FIELD

The present invention relates to a novel fluoropolyether-containing polymer capable of being converted into a fluoropolyether-containing reactive polymer having a plurality of reactive functional groups in one molecule (hereinafter, referred to as a fluoropolyether-containing polyfunctional reactive polymer).

### BACKGROUND ART

Generally, fluoropolyether-containing compounds exhibit, by virtue of their extremely low surface free energy, water/oil repellency, chemical resistance, lubricity, parting, anti-fouling and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically alkoxysilyl group) in one molecule. In the presence of airborne moisture or the like, the alkoxysilyl groups undergo self-condensation reaction to form a coating. The alkoxysilyl groups form chemical and physical bonds with the surface of glass or metal, whereby the coating becomes a tough coating having durability.

Patent Document 1 (JP-A 2016-204656) describes a fluoropolyether-containing polymer modified silane having a plurality of alkoxysilyl groups in one molecule as a compound having a fluoropolyether group and an alkoxysilyl group. Since the fluoropolyether-containing polymer modified silane has a large number of reactive functional groups, it is possible to impart excellent abrasion resistance and water/oil repellency to a glass surface by treating the glass surface with a cured product of a surface treatment agent containing the fluoropolyether-containing polymer modified silane.

In addition, a hard coat treatment has been generally used as a means for protecting a surface of a resin molded body or the like. This is to form a hard cured resin layer (hard coat layer) on the surface of the molded body to make it less likely to be damaged. In recent years, with expansion of fields of application of resin molded articles and a trend of increasing added value, there are increasing demands for higher functionality of cured resin layer (hard coat layer), and as one of them, there is a demand for imparting anti-fouling property to a hard coat layer. By imparting properties such as water repellency and oil repellency to a surface of the hard coat layer, the hard coat layer is hardly stained or can be easily removed even if stained.

Patent Document 2 (JP-A 2010-53114) shows production of a hard coat layer imparted with high anti-fouling property by adding a fluoropolyether-containing polymer modified acrylate having a plurality of acrylic groups in one molecule to an acryl-based curable resin composition and curing the acryl-based curable resin composition.

In recent years, there is an increasing demand for higher functionalization of fluoropolyether-containing polymers such as fluoropolyether-containing polymer modified silanes and fluoropolyether-containing polymer modified acrylates for the purpose of surface protection of glass, resin moldings, and the like, and a fluoropolyether-containing polymer capable of being easily converted into a fluoropolyether-containing polyfunctional reactive polymer having a plurality of reactive functional groups in one molecule is required.

### PRIOR ART DOCUMENTS

### PATENT DOCUMENTS

Patent Document 1: JP-A 2016-204656
Patent Document 2: JP-A 2010-53114

### SUMMARY OF INVENTION

### TECHNICAL PROBLEM

The present invention has been made in view of the above circumstances, and an object of the present invention is to provide a fluoropolyether-containing polymer that can be easily converted into a fluoropolyether-containing polyfunctional reactive polymer serving as a water-repellent and oil-repellent treatment agent capable of imparting excellent properties to a surface of a cured product.

### SOLUTION TO PROBLEM

Making extensive investigations to attain the above object, the present inventors have found that in the foregoing fluoropolyether-containing polyfunctional reactive polymer, a polymer containing a polysiloxane structure (particularly a branched or cyclic polysiloxane structure) on a linking group between the fluoropolyether group and the reactive functional group can be a water-repellent and oil-repellent treatment agent that can impart an excellent characteristic to a surface of a cured product.

Therefore, as a result of further studies, the present inventors have found that a novel fluoropolyether-containing polymer represented by the following general formula (1) can be, after introduction of a reactive functional group, a polymer containing a polysiloxane structure (particularly a branched or cyclic polysiloxane structure) on a linking group between the fluoropolyether group and the reactive functional group, and have completed the present invention.

Therefore, the present invention provides the following fluoropolyether-containing polymer.
[1] A fluoropolyether-containing polymer having the following general formula (1): 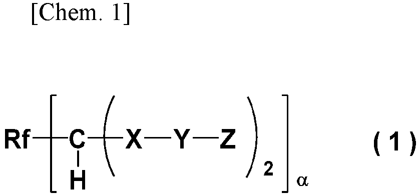 wherein Rf is a monovalent or divalent fluoropolyether-containing polymer residue, X is independently a single bond or a divalent heteroatom, Y is independently a C₁-C₂₀ divalent hydrocarbon group which may contain one or more selected from an oxygen atom, a nitrogen atom, a silicon atom, and a sulfur atom, Z is independently a monovalent organopolysiloxane residue having at least one silicon-hydrogen bond (SiH group) at an end, and may form a cyclic structure, and α is 1 or 2.
[2] The fluoropolyether-containing polymer of [1], wherein α in the formula (1) is 1, and Rf is a monovalent fluoropolyether group having the following general formula (2): 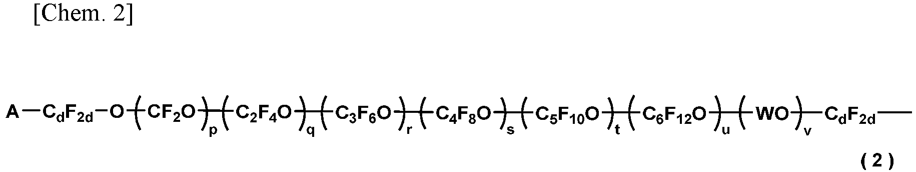 wherein A is a hydrogen atom, a fluorine atom, or an unsubstituted or fluorine-substituted C₁-C₂₀ monovalent hydrocarbon group, W is independently a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.
[3] The fluoropolyether-containing polymer of [1], wherein α in the formula (1) is 2, and Rf is a divalent fluoropolyether group having the following general formula (3): 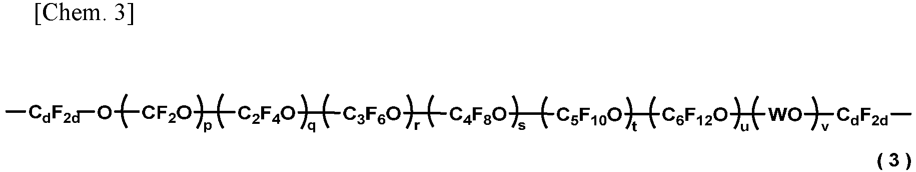 wherein W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.
[4] The fluoropolyether-containing polymer of any one of [1] to [3], wherein in the formula (1), two X's are present at one end of the molecular chain when α = 1, and two X's are present at each of both ends of the molecular chain (four X's in the molecule) when α = 2; one X is an oxygen atom, and the other X is a single bond at each end.
[5] The fluoropolyether-containing polymer of any one of [1] to [4], wherein in the formula (1), Y is independently a C₂-C₁₀ alkylene group, or a C₂-C₁₀ alkylene group containing a C₆-C₈ arylene group.
[6] The fluoropolyether-containing polymer of any one of [1] to [5], wherein in the formula (1), Z is a linear monovalent organopolysiloxane residue of 2 to 10 silicon atoms having 1 to 9 silicon-hydrogen bonds (SiH groups) at an end or a branched or cyclic monovalent organopolysiloxane residue of 3 to 10 silicon atoms having 1 to 9 silicon-hydrogen bonds (SiH groups) at an end.
[7] The fluoropolyether-containing polymer of any one of [1] to [6], wherein in the formula (1), Z has any one of the following formulae: 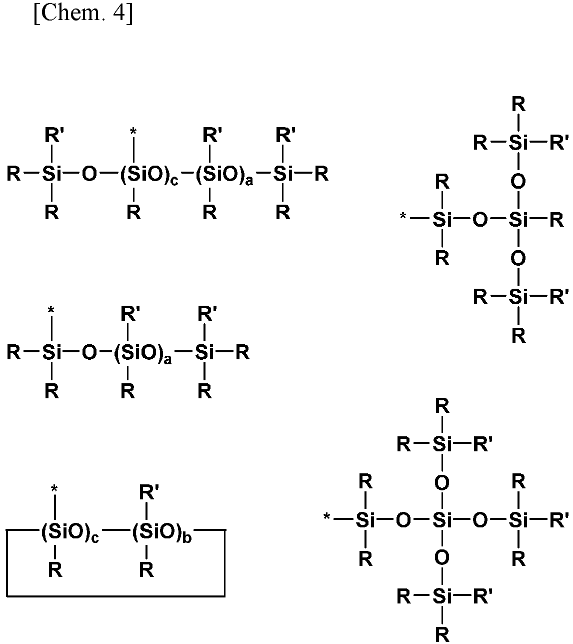 wherein * is a bond bonded to Y in the formula (1), R is independently a C₁-C₂₀ monovalent hydrocarbon group, R' is independently a hydrogen atom or a C₁-C₂₀ monovalent hydrocarbon group, at least one R' is a hydrogen atom, a is an integer of 0 to 6, b is an integer of 2 to 9, c is 1, and individual repeat units shown in parentheses with a and c may be randomly bonded.
[8] The fluoropolyether-containing polymer of any one of [1] to [7], wherein the polymer having the formula (1) is selected from polymers having the following general formulae (4) and (5): 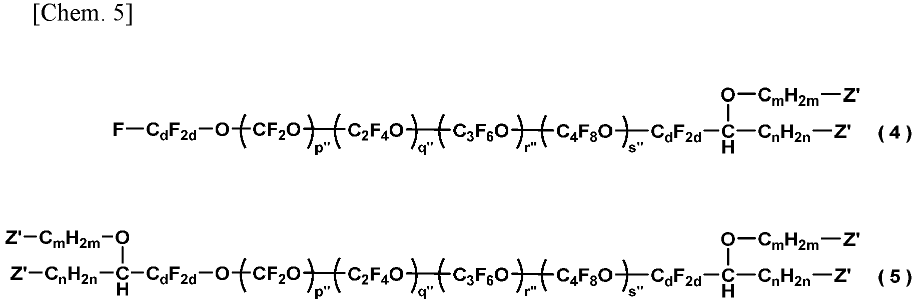 wherein d is independently an integer of 1 to 3 for each unit, p", q", r", and s" are each an integer of 0 to 100, the sum of p", q", r", and s" in each formula is 3 to 100, individual repeat units shown in parentheses with p", q", r", and s" may be randomly bonded, m and n are each independently an integer of 2 to 10 for each unit, each of these units may be linear or branched, and Z' independently has any one of the following formulae: 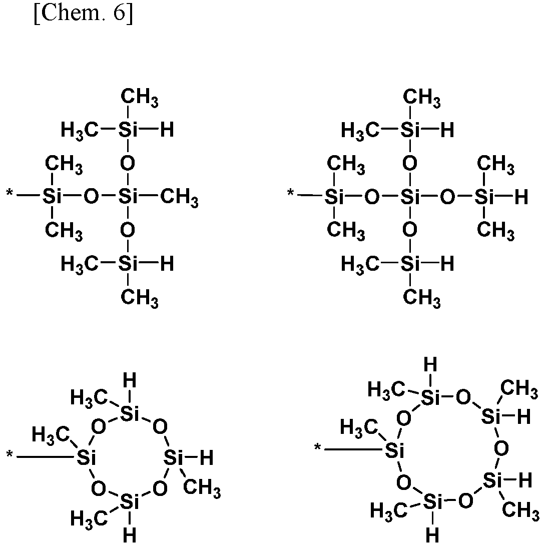 wherein * is a bond bonded to a terminal carbon atom in the formulae (4) and (5).

### ADVANTAGEOUS EFFECTS OF INVENTION

The novel fluoropolyether-containing polymer of the present invention is suitable as a precursor of a fluoropolyether-containing polyfunctional reactive polymer, and the fluoropolyether-containing polyfunctional reactive polymer obtained by converting the polymer can be a water-repellent and oil-repellent treatment agent capable of imparting excellent properties to a surface of a cured product.

### DESCRIPTION OF EMBODIMENTS

As used herein, the term "about (a value)" is a numerical value (approximate value) obtained by counting fractions over 1/2 as one and disregarding the rest, and when the lowest digit of the numerical value described is not "0", includes a numerical value range in which the numerical value described is reached by counting fractions of the digit below the lowest digit over 1/2 as one and disregarding the rest. For example, "about 3 equivalents" implies a range from 2.5 equivalents to 3.4 equivalents, and "about 0.02 equivalent" implies a range from 0.015 equivalent to 0.024 equivalent. When the lowest digit of the numerical value described is "0", the term "about (a value)" includes a numerical value range in which the numerical value described is reached by counting fractions of the lowest digit over 1/2 as one and disregarding the rest. For example, "about 80°C" implies a range from 75°C to 84°C.

The fluoropolyether-containing polymer of the present invention is represented by the following general formula (1): 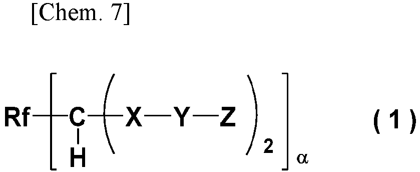 wherein Rf is a monovalent or divalent fluoropolyether-containing polymer residue, X is independently a single bond or a divalent heteroatom, Y is independently a C₁-C₂₀ divalent hydrocarbon group which may contain one or more selected from an oxygen atom, a nitrogen atom, a silicon atom, and a sulfur atom, Z is independently a monovalent organopolysiloxane residue having at least one silicon-hydrogen bond (SiH group) at an end, and may form a cyclic structure, and a is 1 or 2.

In the formula (1), Rf is a monovalent or divalent fluoropolyether-containing polymer residue, which is preferably a monovalent fluoropolyether group represented by the following general formula (2) when α is 1 (i.e., Rf is a monovalent fluoropolyether-containing polymer residue), or a divalent fluoropolyether group represented by the following general formula (3) when α is 2 (i.e., Rf is a divalent fluoropolyether-containing polymer residue). 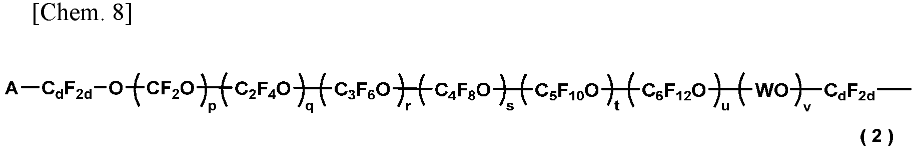 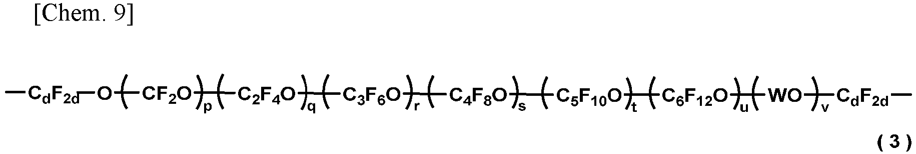 wherein A is a hydrogen atom, a fluorine atom, or an unsubstituted or fluorine-substituted C₁-C₂₀ monovalent hydrocarbon group, W is independently a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.

In the formula (2), A is a hydrogen atom, a fluorine atom, or an unsubstituted or fluorine-substituted C₁-C₂₀ monovalent hydrocarbon group, particularly an alkyl group, and A is preferably a hydrogen atom, a fluorine atom, or a C₁-C₆ fluoroalkylene group, and still more preferably a fluorine atom or a C₁-C₆ perfluoroalkyl group.

In the formulae (2) and (3), W is a C₁-C₆ fluoroalkylene group containing at least one hydrogen atom, examples of which include perfluoroalkylene groups such as CF₂, C₂F₄, C₃F₆, C₄F₈, C₅F₁₀ and C₆F₁₂ units in which one or two fluorine atoms are substituted by hydrogen atoms.

In the formulae (2) and (3), d is independently for each unit an integer of 1 to 3, preferably 1 or 2.

Also, p, q, r, s, t, u, and v are each an integer of 0 to 200, preferably p is an integer of 0 to 100, q is an integer of 0 to 100, r is an integer of 0 to 100, s is an integer of 0 to 100, t is an integer of 0 to 100, u is an integer of 0 to 100, v is an integer of 0 to 100, and the sum of p, q, r, s, t, u, and v is 3 to 200, preferably 10 to 100. When the sum of p, q, r, s, t, u, and v is smaller than the above upper limit, the performance of the fluoropolyether-containing polyfunctional reactive polymer obtained by introducing a reactive functional group into the fluoropolyether-containing polymer can be obtained, and when the sum is larger than the above lower limit, the characteristics of the fluoropolyether group can be sufficiently exhibited, which is preferable.

When r, s, t, u, and v are all 0, it is preferable that p and q are each an integer of 5 to 100, and the sum of p and q is 10 to 105, and particularly 15 to 60.

In the formulae (2) and (3), each unit may be linear or branched. Also, individual repeat units shown in parentheses with p, q, r, s, t, u, and v may be randomly bonded.

Specific examples of Rf include those shown below. 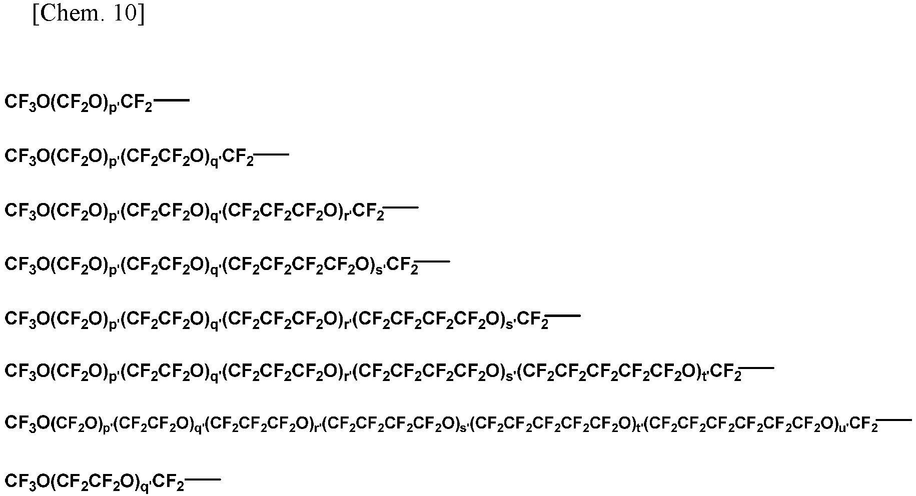 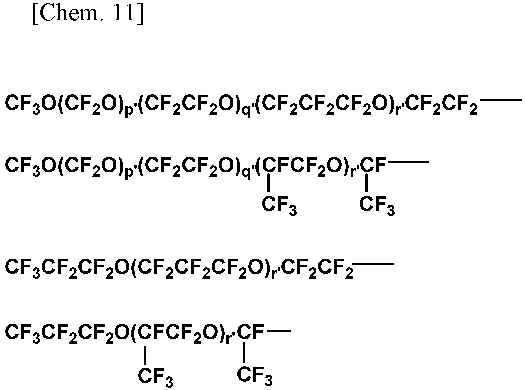 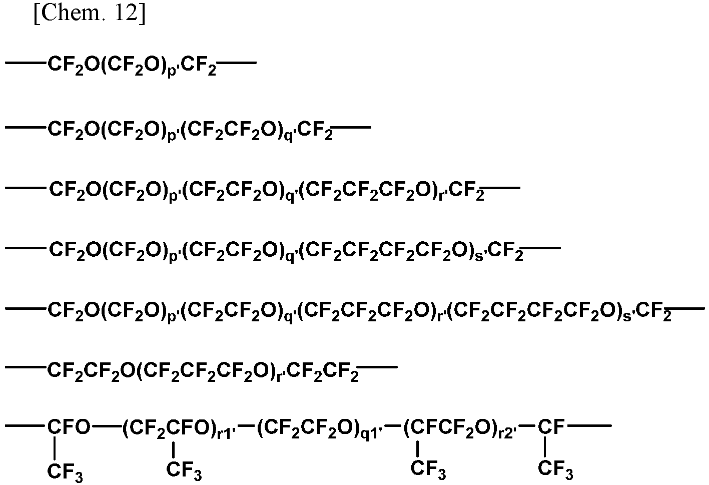 wherein p', q', r', s', t', u', q1', r1', and r2' are each an integer of 1 or more, and the sum of p', q', r', s', t', u', q1', r1', and r2' in each formula is 3 to 200, and individual repeat units shown in parentheses with p', q', r', s', t', and u' may be randomly bonded.

Rf is preferably one described below. 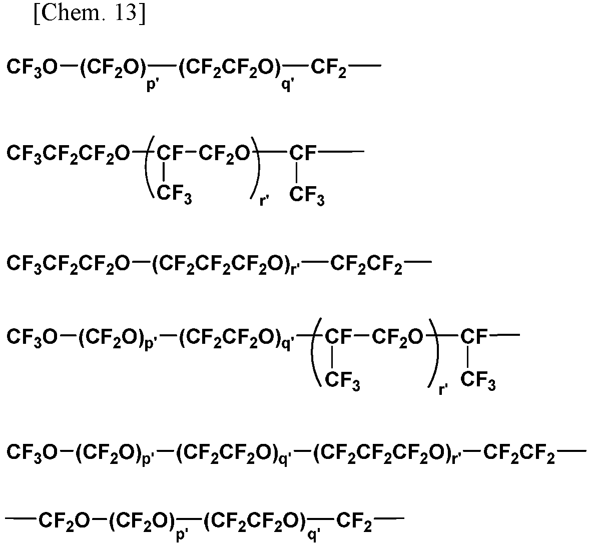 wherein p', q', r' and the sum thereof in each formula are the same as described above, and individual repeat units shown in parentheses with p', q', and r' may be randomly bonded.

A molecular weight of Rf is not particularly limited as long as a numerical average molecular weight of a corresponding structural part is each contained in the range of 400 to 40,000, preferably 2,000 to 25,000, and a molecular weight distribution (or distribution of degree of polymerization) thereof is not particularly limited. In the present invention, the molecular weight (or the degree of polymerization or the number of repeat units) can be determined as a numerical average molecular weight (or number average degree of polymerization) in terms of polystyrene by gel permeation chromatography (GPC) analysis using a fluorine-based solvent as a developing solvent, and is preferably a numerical average molecular weight (or number average degree of polymerization) calculated from a characteristic peak intensity ratio between a terminal structure and a main chain structure of a fluoropolyether-containing polymer based on ¹H-NMR analysis and ¹⁹F-NMR analysis (the same applies hereinafter).

In the above formula (1), X is independently a single bond or a divalent heteroatom, and examples of the divalent heteroatom include an oxygen atom, a nitrogen atom, and a sulfur atom, but preferably, two X's are present at each end of the molecular chain (i.e., one end of the molecular chain when α = 1, and both ends of the molecular chain when α = 2); one X is an oxygen atom, and the other X is a single bond.

In the formula (1), Y is independently a C₁-C₂₀ divalent hydrocarbon group which may contain one or more selected from an oxygen atom, a nitrogen atom, a silicon atom, and a sulfur atom. Specific examples of Y include C₁-C₂₀, preferably C₁-C₁₀ alkylene groups such as methylene, ethylene, propylene (trimethylene, methylethylene), butylene (tetramethylene, methylpropylene), hexamethylene, and octamethylene, C₆-C₂₀ arylene groups such as phenylene, combinations of at least two of the foregoing (e.g., C₂-C₁₀ alkylene groups containing a C₆-C₈ arylene group (C₈-C₁₈ alkylene arylene groups), and the like), and groups in which one or more bonds selected from an amide bond (e.g., an unsubstituted amide bond, an N-methyl-substituted amide bond, or an N-phenyl-substituted amide bond), an ether bond, a carbonyl bond, an ester bond, a diorganosilylene group (e.g., a dialkylsilylene group such as dimethylsilylene), a silarylene bond (e.g., a silphenylene bond), and a silalkylene bond (e.g., a silethylene bond) are linked or intervened, and Y is preferably a C₂-C₁₀ alkylene group, a C₂-C₁₀ alkylene group containing a C₆-C₈ arylene group, and more preferably a C₃-C₆ linear alkylene group.

Specific examples of Y include the following groups: 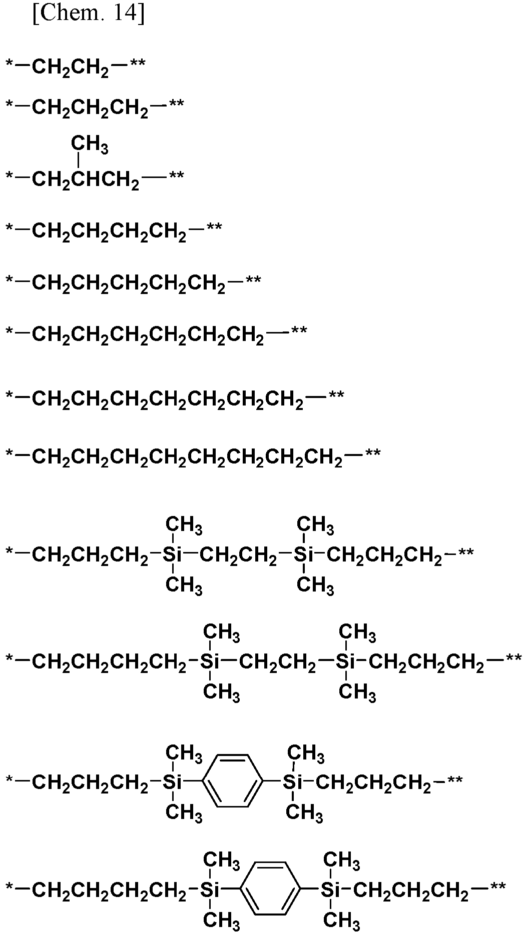 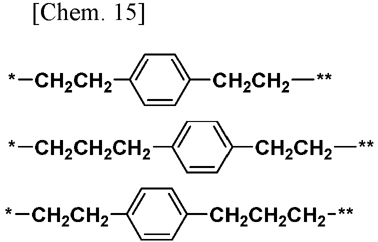 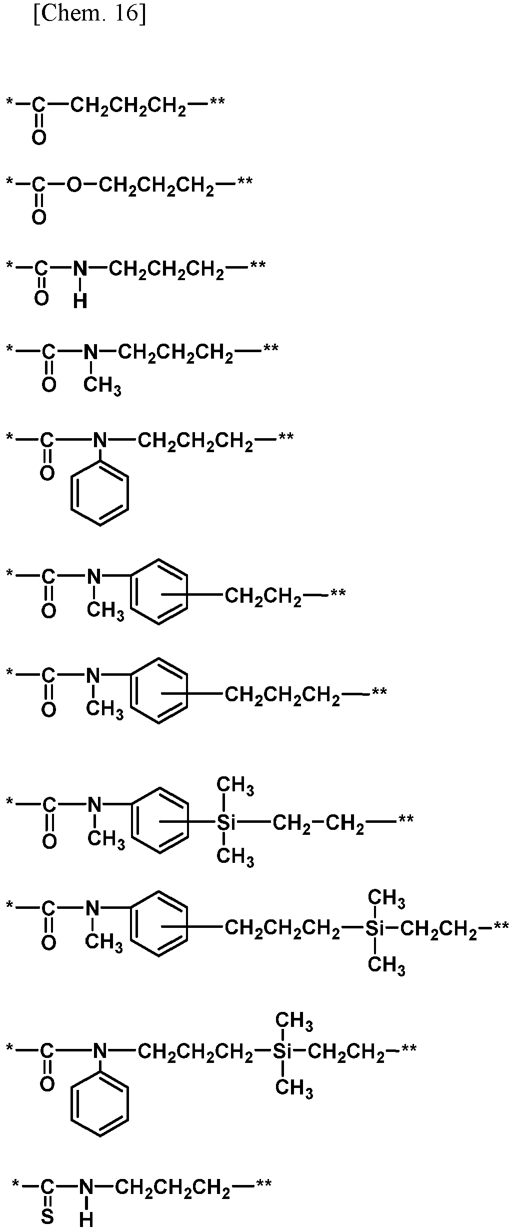 wherein * is a bond bonded to X in the formula (1), and ** is a bond bonded to Z in the formula (1).

Y is more preferably one described below. 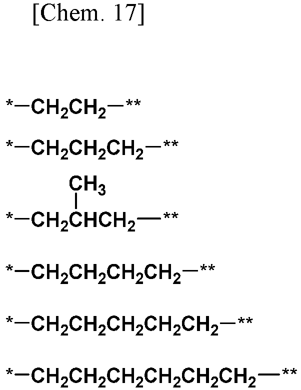 wherein * is a bond bonded to X in the formula (1), and ** is a bond bonded to Z in the formula (1).

In the formula (1), Z is independently a monovalent organopolysiloxane residue having at least one silicon-hydrogen bond (SiH group) at an end, and may form a cyclic structure. Z is preferably a linear monovalent organopolysiloxane residue of 2 to 10 silicon atoms having 1 to 9, particularly 2 to 7 silicon-hydrogen bonds (SiH groups) at an end, or a branched or cyclic monovalent organopolysiloxane residue of 3 to10 silicon atoms having 1 to 9, particularly 2 to 7 silicon-hydrogen bonds (SiH groups) at an end.

Specific examples of Z include the following groups: 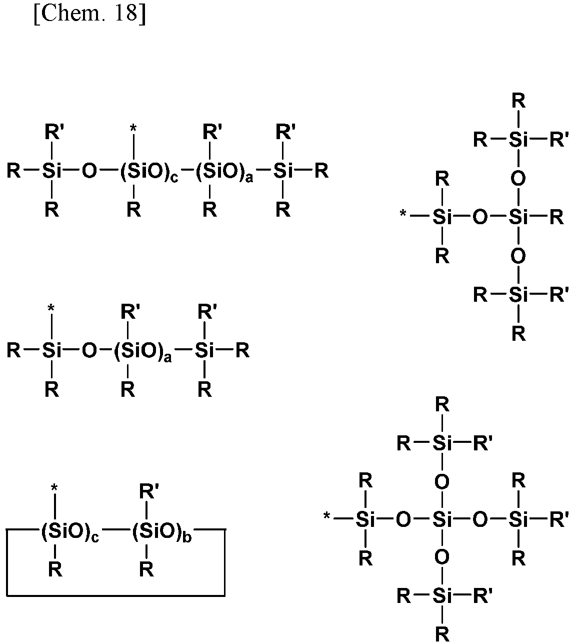 wherein * is a bond bonded to Y in the formula (1), R is independently a C₁-C₂₀ monovalent hydrocarbon group, R' is independently a hydrogen atom or a C₁-C₂₀ monovalent hydrocarbon group, at least one R' is a hydrogen atom, a is an integer of 0 to 6, b is an integer of 2 to 9, c is 1, and individual repeat units shown in parentheses with a and c may be randomly bonded.

Here, R is a C₁-C₂₀ monovalent hydrocarbon group, preferably a C₁-C₂₀ alkyl group such as methyl, ethyl, propyl or butyl, or a C₆-C₁₀ aryl group such as phenyl, and more preferably methyl. R may be the same or different.

Also, R' is a hydrogen atom or a C₁-C₂₀ monovalent hydrocarbon group, preferably a hydrogen atom or a C₁-C₂₀ alkyl group such as methyl, ethyl, propyl or butyl, or a C₆-C₁₀ aryl group such as phenyl, and more preferably a hydrogen atom. R' may be the same or different, and at least one, preferably two or more, more preferably all R's are hydrogen atoms.

Z is preferably one described below. 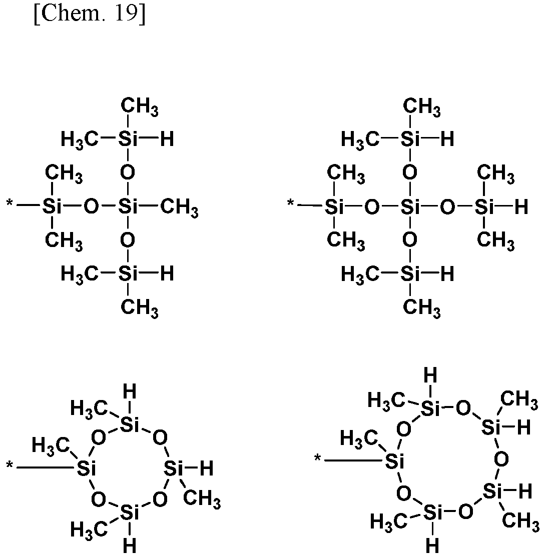 wherein * is a bond bonded to Y in the formula (1).

Examples of the fluoropolyether-containing polymer represented by the formula (1) include those represented by the following general formulae (4) and (5): 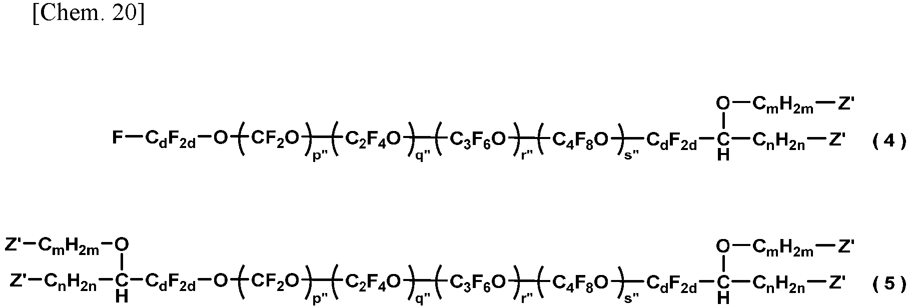 wherein d is independently an integer of 1 to 3 for each unit, p", q", r", and s" are each an integer of 0 to 100, the sum of p", q", r", and s" in each formula is 3 to 100, individual repeat units shown in parentheses with p", q", r", and s" may be randomly bonded, m and n are each independently an integer of 2 to 10 for each unit, each of these units may be linear or branched, and Z' independently has any one of the following formulae: 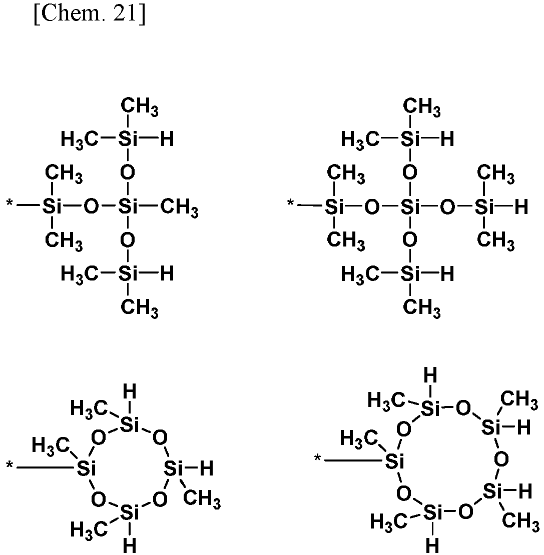 wherein * is a bond bonded to a terminal carbon atom in the formulae (4) and (5).

Examples of the fluoropolyether-containing polymer represented by the formula (1) include those represented by the following formulae: 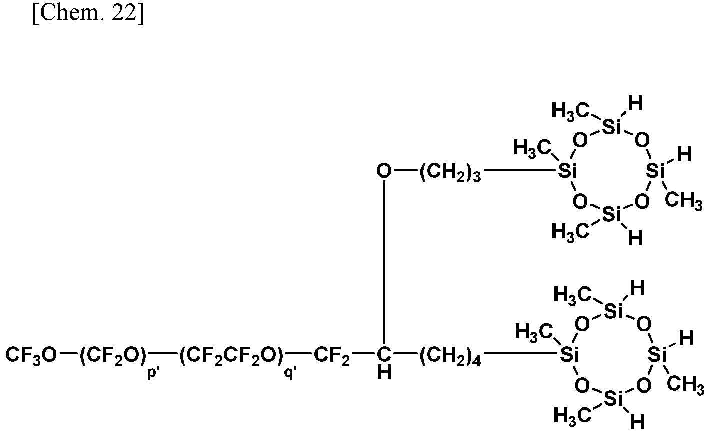 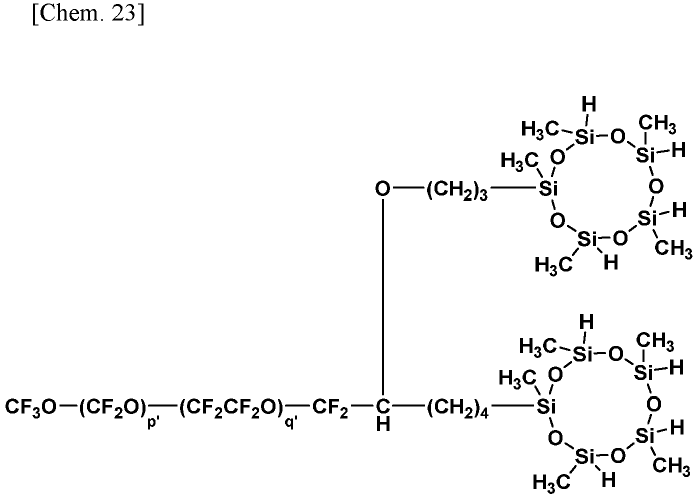 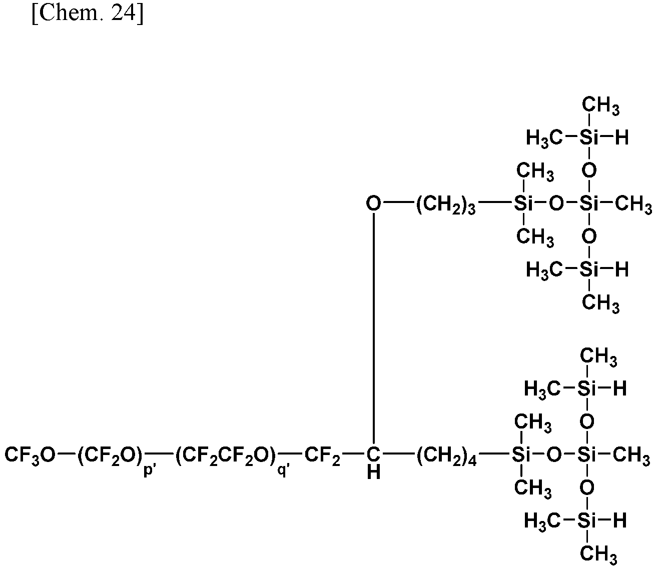 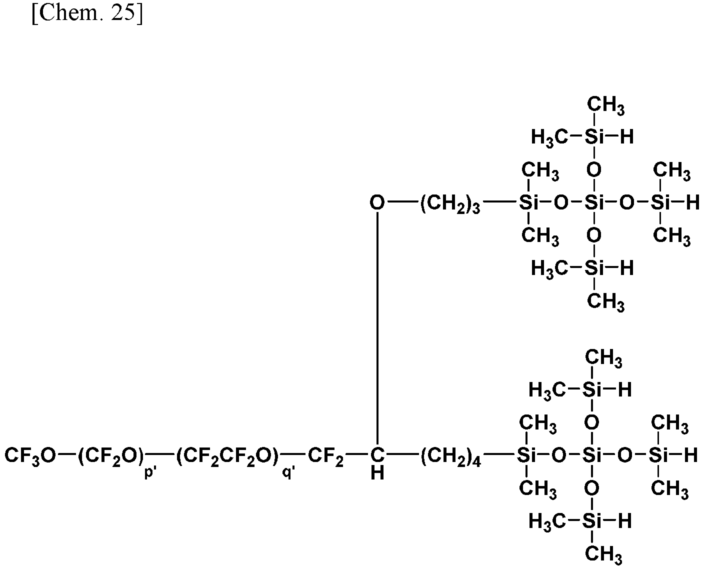 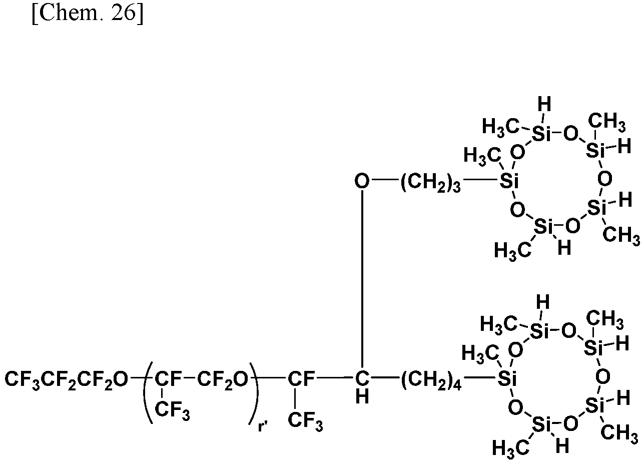 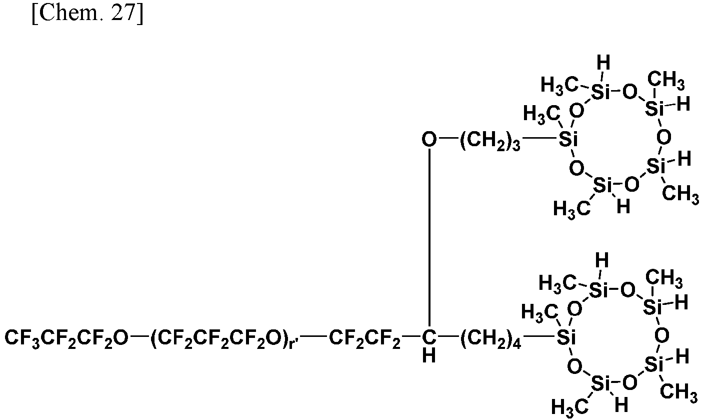 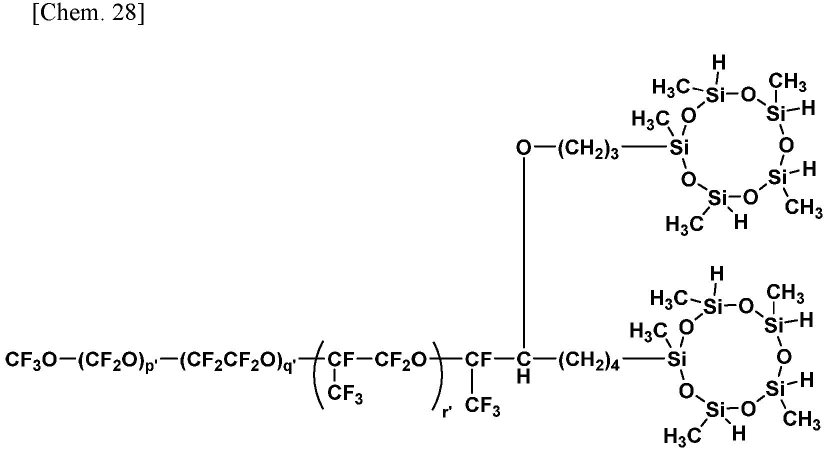 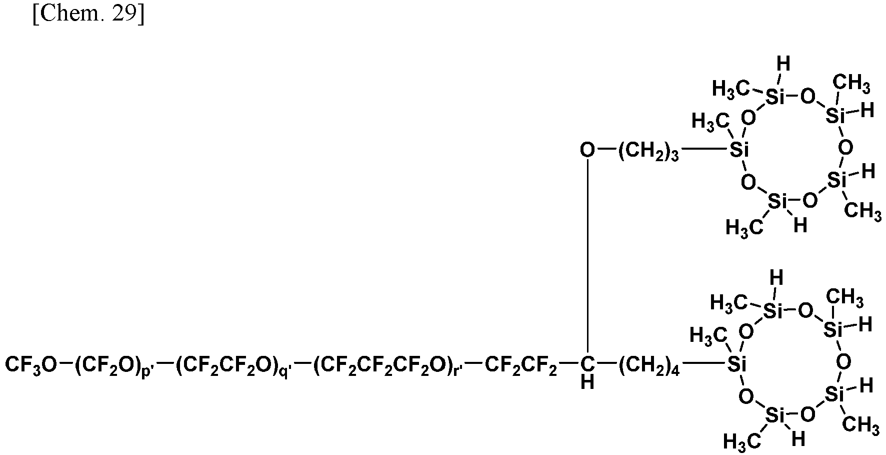 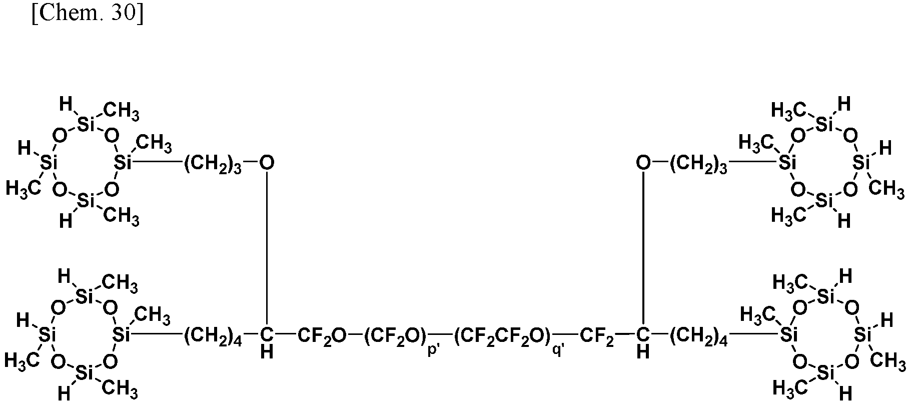 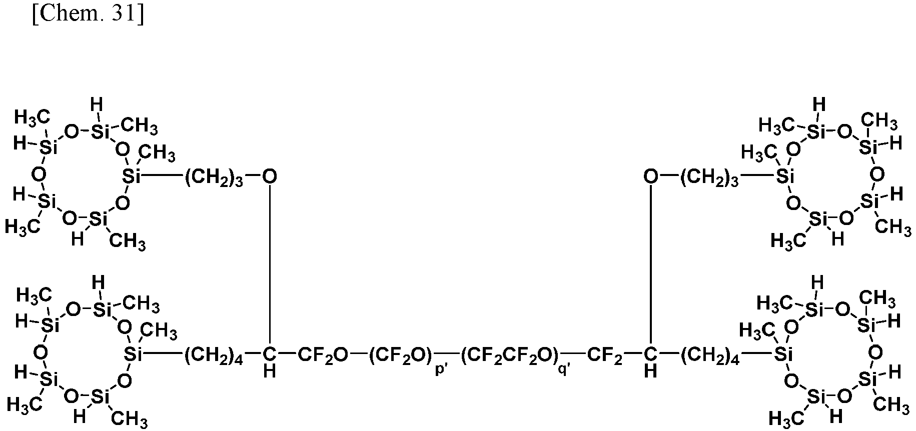 wherein p', q', r' and the sum thereof in each formula are the same as described above, and individual repeat units shown in parentheses with p', q', and r' may be randomly bonded.

The fluoropolyether-containing polymer represented by the formula (1) wherein α=1 (i.e., Rf is a monovalent fluoropolyether-containing polymer residue) or α=2 (i.e., Rf is a divalent fluoropolyether-containing polymer residue) may be prepared, for example, by the following method.

First, a fluoropolyether-containing polymer having a carbonyl group at an end, represented by the following general formula (6): 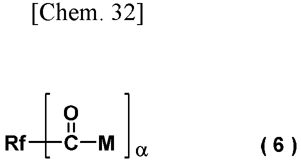 wherein Rf and α are the same as described above, and M is a detachable monovalent group, is reacted with an organic metal reagent having an aliphatic unsaturated double bond (olefin site) at an end and a β-hydrogen atom (i.e., hydrogen atom bonded to the carbon atom at β position relative to metal atom), preferably in the presence of a solvent.

In the formula (6), M is an eliminatable monovalent group, for example, a hydrogen atom, a halogen atom, hydroxy, alkoxy, amino, alkylamino, thiol, alkylthio or acyl group.

Examples of such M include the following groups.

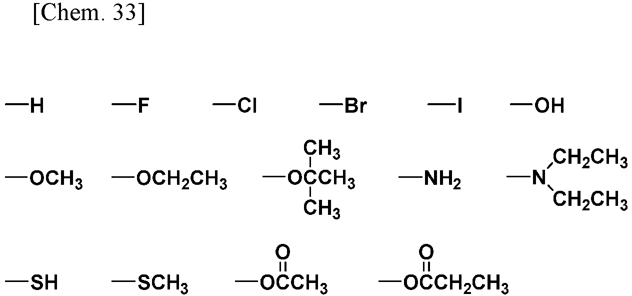

Examples of the fluoropolyether-containing polymer having a carbonyl group at an end, represented by the formula (6), are shown below. 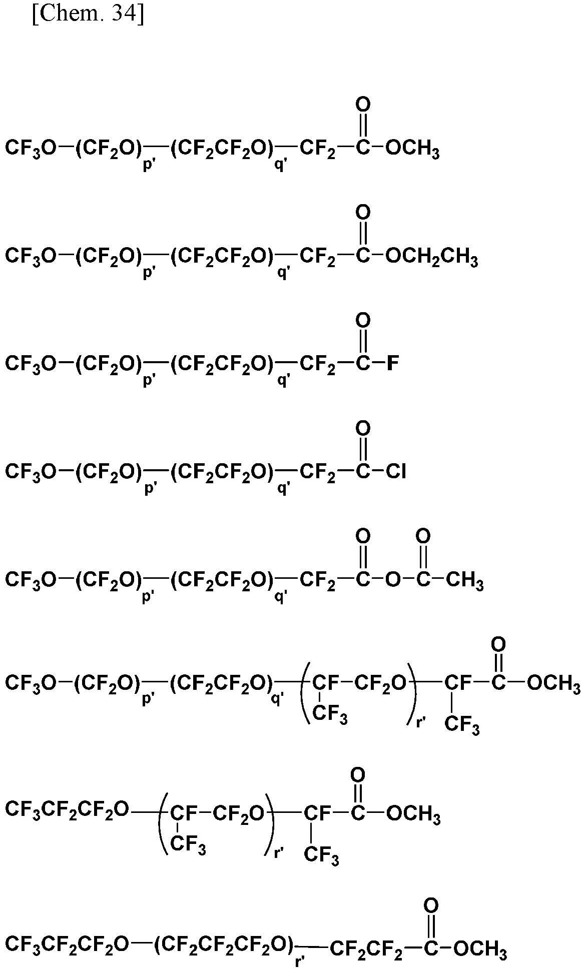 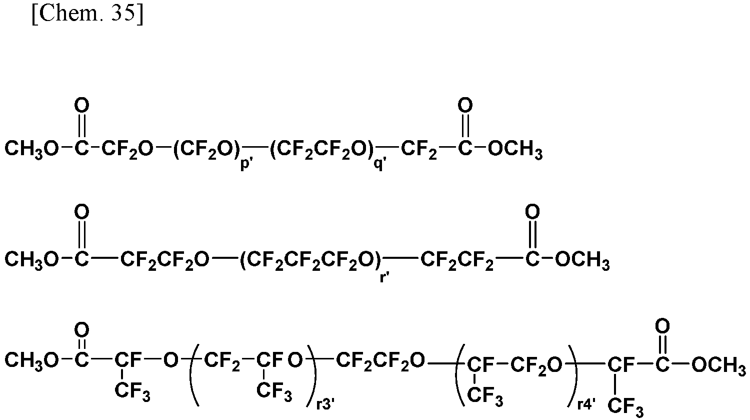 wherein p', q', r' and the sum thereof in each formula are the same as described above, and individual repeat units shown in parentheses with p', q', and r' may be randomly bonded, r3' and r4' each are an integer of 1 or more, and the sum of r3' and r4' is 2 to 199.

Illustrative of the organic metal reagent having an aliphatic unsaturated double bond at an end and a β-hydrogen atom are organolithium reagents, Grignard reagents, organozinc reagents, organoboron reagents, and organotin reagents. Inter alia, Grignard reagents and organozinc reagents are preferred for ease of handling. The following compounds are preferably used as the organic metal reagent.

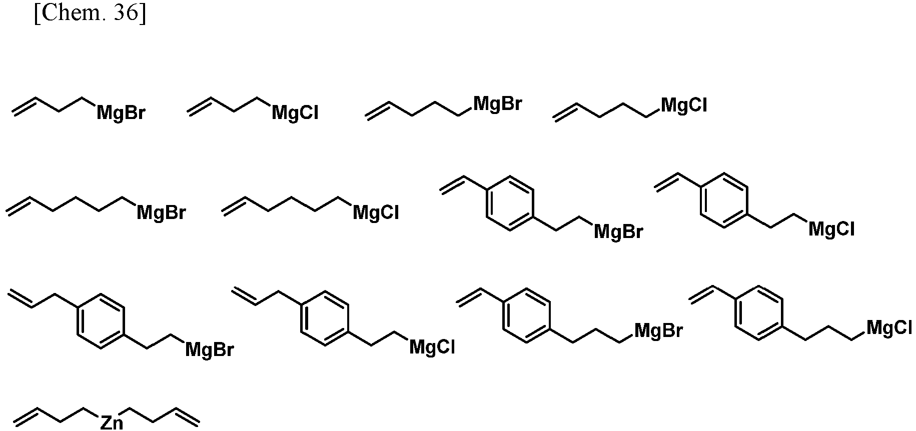

The amount of the organic metal reagent having an aliphatic unsaturated double bond at an end and a β-hydrogen atom is preferably 2 to 5 equivalents, more preferably 2.5 to 3.5 equivalents, still more preferably about 3 equivalents per equivalent of reactive end group (eliminatable monovalent group) in the fluoropolyether-containing polymer having a carbonyl group at an end, represented by the formula (6).

A solvent may be used in the reaction of the fluoropolyether-containing polymer having a carbonyl group at an end, represented by the formula (6), with the organic metal reagent having an aliphatic unsaturated double bond at an end and a β-hydrogen atom. Although the solvent used herein is not particularly limited, a fluorochemical solvent is preferably used because the reactant is a fluorine compound. Suitable fluorochemical solvents include 1,3-bistrifluoromethylbenzene, trifluoromethylbenzene, perfluoro solvents (Asahiklin AC2000, Asahiklin AC6000) marketed from AGC Inc., hydrofluoroether (HFE) solvents (NOVEC 7100: C₄F₉OCH₃, NOVEC 7200: C₄F₉OC₂H₅, NOVEC 7300: C₂F₅-CF(OCH₃)-CF(CF₃)₂) marketed from 3M, and perfluoro solvents (PF5080, PF5070, PF5060) marketed from 3M. The fluorochemical solvents may be used alone or in admixture.

Besides the fluorochemical solvent, an organic solvent may also be used as the solvent. Ether solvents such as tetrahydrofuran (THF), monoethylene glycol dimethyl ether, diethylene glycol dimethyl ether, triethylene glycol dimethyl ether, tetraethylene glycol dimethyl ether, and dioxane may be used as the organic solvent. The organic solvent may be used alone or in admixture with the fluorochemical solvent.

The amount of the solvent used is 10 to 600 parts by weight, preferably 50 to 400 parts by weight, and still more preferably about 200 to 350 parts by weight per 100 parts by weight of the fluoropolyether-containing polymer having a carbonyl group at an end, represented by the formula (6).

Conditions for the reaction of the fluoropolyether-containing polymer having a carbonyl group at an end, represented by the formula (6), with the organic metal reagent having an aliphatic unsaturated double bond at an end and a β-hydrogen atom include 0 to 80°C, preferably 45 to 70°C, more preferably about 50°C and 1 to 12 hours, preferably 5 to 7 hours.

After the reaction is performed under the above conditions, the reaction is stopped, and the solution is separated into a water layer and a fluorochemical solvent layer by separatory operation. The fluorochemical solvent layer is washed with an organic solvent, after which the solvent is distilled off, obtaining a fluoropolyether-containing polymer having a hydroxy group and an olefin site at an end of the molecular chain, represented by the following general formula (7). 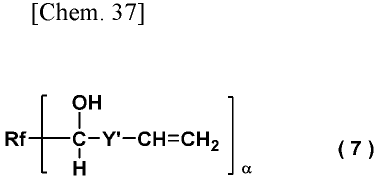 wherein Rf and α are the same as described above, and Y' is independently a single bond or a C₁-C₁₈ divalent hydrocarbon group which may contain one or more selected from an oxygen atom, a nitrogen atom, a silicon atom, and a sulfur atom.

In the formula (7), Y' is a single bond or a C₁-C₁₈, particularly C₁-C₁₂ divalent hydrocarbon group which may contain one or more selected from an oxygen atom, a nitrogen atom, a silicon atom, and a sulfur atom. Specific examples thereof include a single bond, C₁-C₁₈ alkylene groups such as methylene, ethylene, propylene (trimethylene, methylethylene), butylene (tetramethylene, methylpropylene), hexamethylene, and octamethylene, and C₁-C₁₀ alkylene groups containing a C₆-C₈ arylene group such as phenylene (e.g., C₇-C₁₈ alkylene arylene groups). Y' is preferably a C₁-C₄ straight alkylene group.

Examples of such Y' include the following groups: 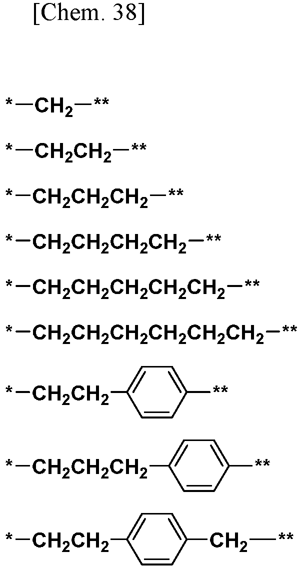 wherein * is a bond bonded to a carbon atom bonded to Rf in the formula (7), and ** is a bond bonded to a vinyl group in the formula (7).

Examples of the fluoropolyether-containing polymer having a hydroxy group and an olefin site at the end of the molecular chain, represented by the formula (7), are shown below. 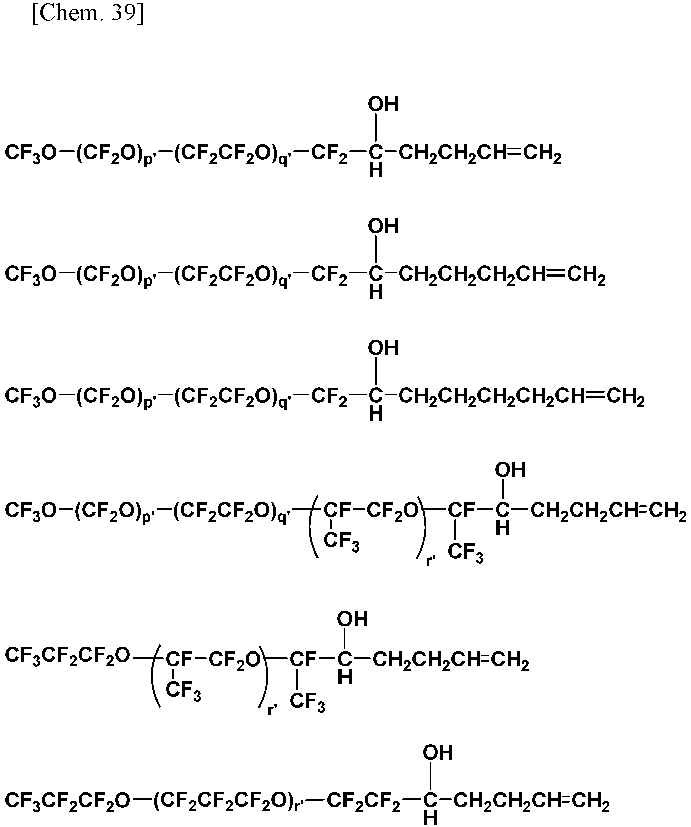 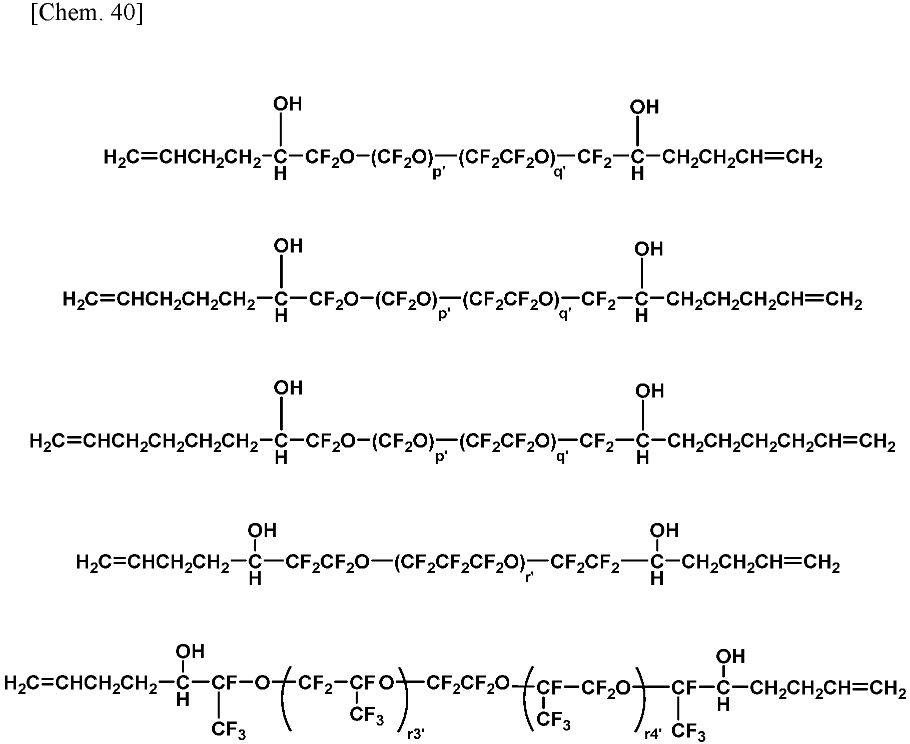 wherein p', q', r', r3', and r4' and the sum thereof in each formula are the same as described above, and individual repeat units shown in parentheses with p', q', and r' may be randomly bonded.

Next, the fluoropolyether-containing polymer having a hydroxy group and an olefin site at the end of the molecular chain, represented by the formula (7), obtained above, and an olefin-introducing agent are aged in the presence of a base at a temperature of 0 to 90°C, preferably 40 to 60°C, more preferably about 50°C for 1 to 48 hours, preferably 10 to 40 hours, more preferably about 24 hours, optionally along with an additive for enhancing reactivity and a solvent.

Here, as the olefin-introducing agent to be reacted with the fluoropolyether-containing polymer having a hydroxy group and an olefin site at the end of the molecular chain, represented by the formula (7), for example, a halide or the like can be used, and specific examples thereof include allyl bromide, allyl chloride, and 3-butenyl bromide.

The amount of the olefin-introducing agent used is 1 to 15 equivalents, more preferably 3 to 6 equivalents, still more preferably about 4 equivalents per equivalent of the reactive end group (hydroxy group) in the fluoropolyether-containing polymer having a hydroxy group and an olefin site at the end of the molecular chain, represented by the formula (7).

Examples of the base used in the reaction of the fluoropolyether-containing polymer having a hydroxy group and an olefin site at the end of the molecular chain, represented by the formula (7), with the olefin-introducing agent include amines and alkali metal bases. Exemplary amines include triethylamine, diisopropylethylamine, pyridine, DBU, and imidazole. Exemplary alkali metal bases include sodium hydroxide, potassium hydroxide, sodium hydride, potassium hydride, alkyllithium, tert-butoxypotassium, lithium diisopropylamide, lithium bis(trimethylsilyl)amide, sodium bis(trimethylsilyl)amide, and potassium bis(trimethylsilyl)amide.

The amount of the base used is 1 to 20 equivalents, more preferably 4 to 8 equivalents, still more preferably about 6 equivalents per equivalent of the reactive end group (hydroxy group) in the fluoropolyether-containing polymer having a hydroxy group and an olefin site at the end of the molecular chain, represented by the formula (7).

For the reaction of the fluoropolyether-containing polymer having a hydroxy group and an olefin site at the end of the molecular chain, represented by the formula (7), with the olefin-introducing agent, an additive for enhancing reactivity such as tetrabutylammonium halide or alkali metal halide may be used. Exemplary additives include tetrabutylammonium chloride, tetrabutylammonium bromide, tetrabutylammonium iodide, tetrabutylammonium hydrogen sulfate, sodium iodide, potassium iodide, cesium iodide, and crown ethers. In the reaction system, catalytic halogen exchange takes place between the additive and the olefin-introducing agent to enhance reactivity whereas a crown ether coordinates with the metal to enhance reactivity.

The amount of the additive used is 0.005 to 0.1 equivalent, more preferably 0.01 to 0.05 equivalent, still more preferably about 0.02 equivalent per equivalent of the reactive end group (hydroxy group) in the fluoropolyether-containing polymer having a hydroxy group and an olefin site at the end of the molecular chain, represented by the formula (7).

In the reaction of the fluoropolyether-containing polymer having a hydroxy group and an olefin site at the end of the molecular chain, represented by the formula (7), with the olefin-introducing agent, a solvent may be used. Although the solvent is not essential, a fluorochemical solvent is typically used as the solvent. Suitable fluorochemical solvents include fluorinated aromatic hydrocarbon solvents such as 1,3-bis(trifluoromethyl)benzene and trifluoromethylbenzene, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M). Organic solvents may also be used, for example, dimethylforamide, dimethylacetamide, dimethyl sulfoxide, acetonitrile, and tetrahydrofuran (THF).

The amount of the solvent used is 10 to 300 parts by weight, preferably 30 to 150 parts by weight, and still more preferably about 50 parts by weight per 100 parts by weight of the fluoropolyether-containing polymer having a hydroxy group and an olefin site at the end of the molecular chain, represented by the formula (7).

By the reaction of the fluoropolyether-containing polymer having a hydroxy group and an olefin site at the end of the molecular chain, represented by the formula (7), with the olefin-introducing agent, a fluoropolyether-containing polymer having two olefin sites at an end of the molecular chain, represented by the following general formula (8), is obtained, 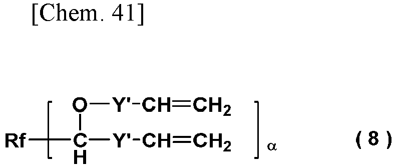 wherein Rf, Y' and α are the same as described above, and a plurality of Y' may be the same or different.

Preferable examples of the fluoropolyether-containing polymer having two olefin sites at the end of the molecular chain, represented by the formula (8), are shown below. 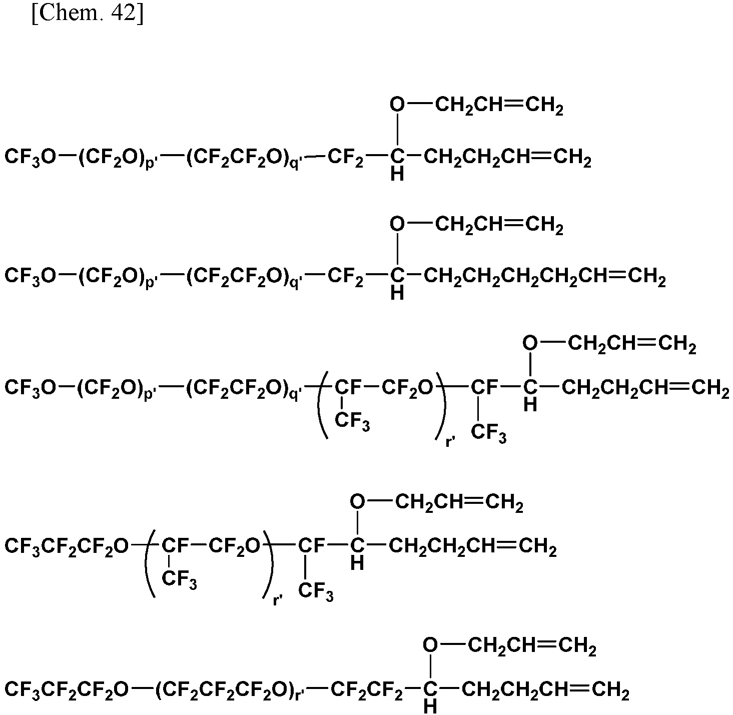 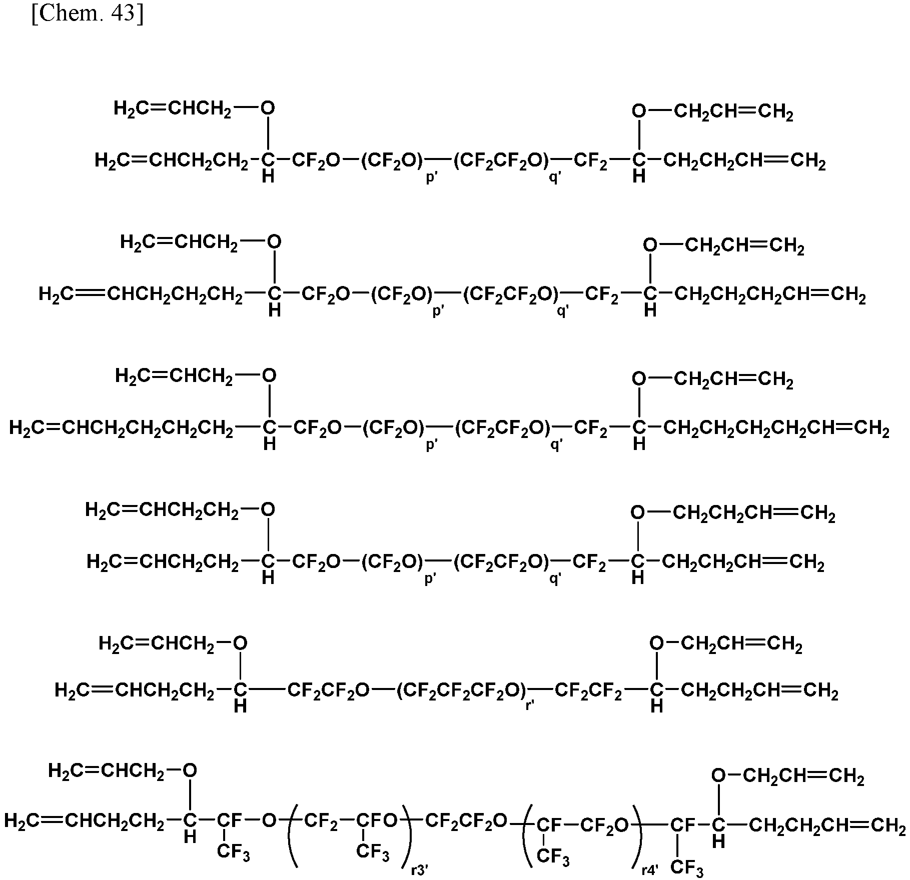 wherein p', q', r', r3', and r4' and the sum thereof in each formula are the same as described above, and individual repeat units shown in parentheses with p', q', and r' may be randomly bonded.

Next, the fluoropolyether-containing polymer having two olefin sites at the end of the molecular chain, represented by the formula (8), obtained above is dissolved in a solvent such as fluorochemical solvent, typically 1,3-bis(trifluoromethyl)benzene. An organosilicon compound having two or more SiH groups in the molecule such as 2,4,6,8-tetramethylcyclotetrasiloxane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for 1 to 72 hours, preferably 20 to 36 hours, more preferably about 24 hours. There is obtained a fluoropolyether-containing polymer represented by the formula (1).

Here, as the organosilicon compound having two or more SiH groups in the molecule to be reacted with the fluoropolyether-containing polymer having two olefin sites at an end of the molecular chain, represented by the above formula (8), a compound represented by the following formula is preferable. 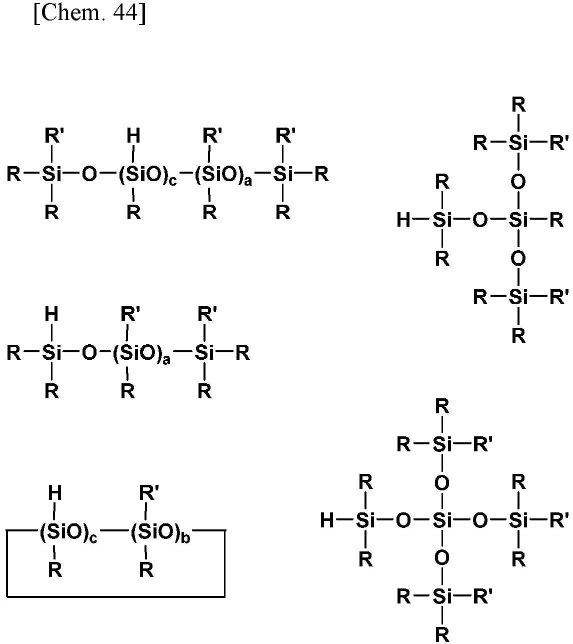 wherein R, R', a, b, and c are the same as described above, and repeat units shown in parentheses with a and c may be randomly bonded.

Examples of the organosilicon compound having two or more SiH groups in the molecule include compounds such as 2,4,6,8-tetramethylcyclotetrasiloxane, 2,4,6,8,10-pentamethylcyclopentasiloxane, methyltris(dimethylsiloxy)silane, and tetrakis(dimethylsiloxy)silane.

In the addition reaction of the fluoropolyether-containing polymer having two olefin sites at the end of the molecular chain, represented by the formula (8), with an organosilicon compound having at least two SiH groups in the molecule, the amount of organosilicon compound having two or more SiH groups in the molecule used is 2 to 10 equivalents, more preferably 3 to 6 equivalents, still more preferably about 5 equivalents per equivalent of the reactive end group (terminal olefin site) in the fluoropolyether-containing polymer having two olefin sites at an end of the molecular chain.

As the solvent used in the reaction between the fluoropolyether-containing polymer having two olefin sites at the end of the molecular chain, represented by the formula (8), and the organosilicon compound having two or more SiH groups in the molecule, fluorochemical solvents are preferred. Suitable fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 200 parts by weight, and still more preferably about 100 to 150 parts by weight per 100 parts by weight of the fluoropolyether-containing polymer having two olefin sites at the end of the molecular chain, represented by the formula (8).

Examples of the hydrosilylation catalyst used in the reaction between the fluoropolyether-containing polymer having two olefin sites at the end of the molecular chain, represented by the formula (8), and the organosilicon compound having two or more SiH groups in the molecule include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The amount of the hydrosilylation catalyst is used in an amount to provide preferably 0.01 to 100 ppm, and more preferably 0.1 to 50 ppm of transition metal based on the weight of the fluoropolyether-containing polymer having two olefin sites at the end of the molecular chain, represented by the formula (8).

Thereafter, the solvent and unreacted reactants are distilled off in vacuum, obtaining the target compound.

In one example, when the fluoropolyether-containing polymer having two olefin sites at the end of the molecular chain, represented by the formula (8), is a compound represented by the following formula: 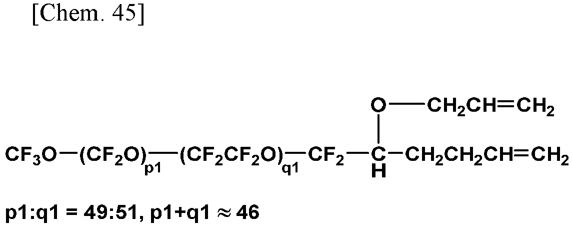 and the organosilicon compound having two or more SiH groups in the molecule is 2,4,6,8-tetramethylcyclotetrasiloxane, a compound represented by the following formula is obtained.

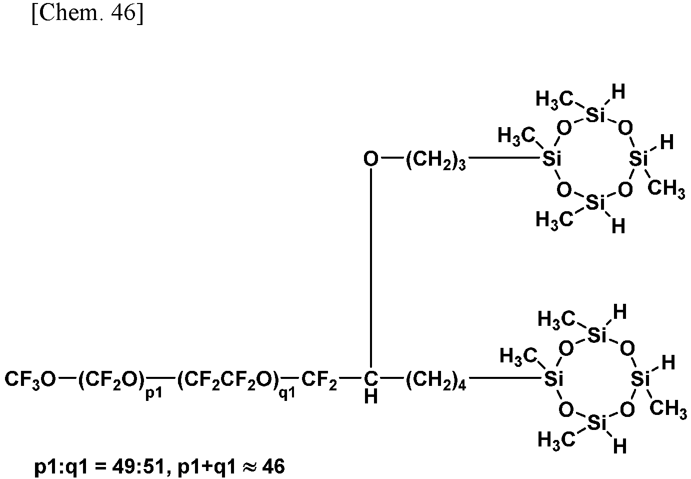

Also, in one example, when the fluoropolyether-containing polymer having two olefin sites at the end of the molecular chain is a compound represented by the following formula: 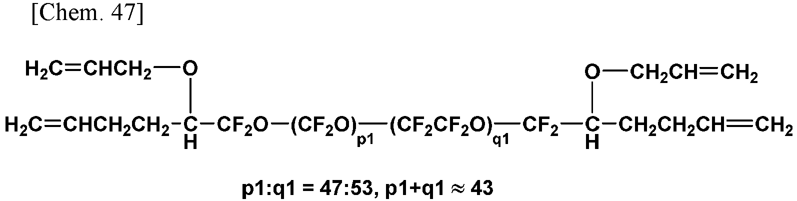 and the organosilicon compound having two or more SiH groups in the molecule is 2,4,6,8-tetramethylcyclotetrasiloxane, a compound represented by the following formula is obtained.

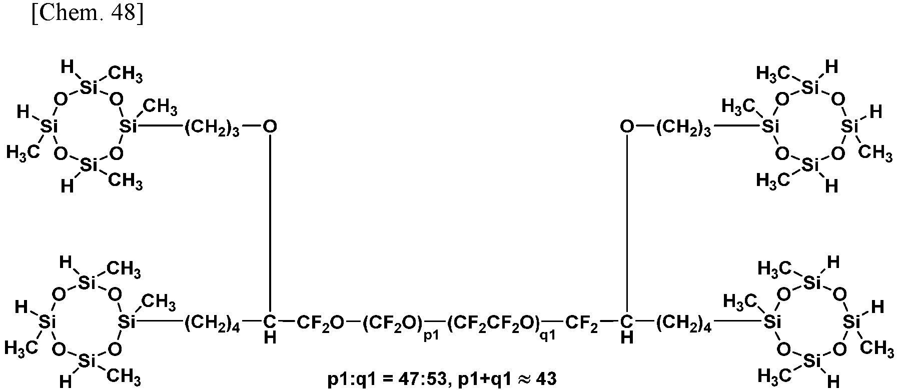

Since the fluoropolyether-containing polymer represented by the formula (1) of the present invention has a plurality of Si-H bonds in one molecule, a plurality of functional groups can be easily introduced by hydrosilylation with a compound having an aliphatic unsaturated bond and a functional group or the like.

Here, examples of the functional groups that can be introduced include hydrolyzable silyl groups (e.g., alkoxysilyl groups), alkyl groups, phenyl groups, vinyl groups, allyl groups, acyl groups, carboxyl groups, ester groups, (meth)acrylic groups, amide groups, isocyanate groups, isocyanurate groups, isothiocyanate groups, hydroxyl groups, amino groups, thiol groups, polyether groups, silyl groups, siloxane groups, thioester groups, phosphoric acid ester groups, and phosphoric acid groups.

### EXAMPLES

Examples are given below for illustrating the present invention, but the present invention is not limited by Examples. In the following Examples, each repeat units shown in parentheses in the fluoropolyether group in the formula may be randomly bonded.

### [Example 1]

A reactor was charged with 272 ml of a 0.5 M THF solution of 3-butenylmagnesium bromide (1.4×10⁻¹ mol). With stirring, a mixture of 200 g (4.5×10⁻² mol) of a compound represented by the following formula (A): 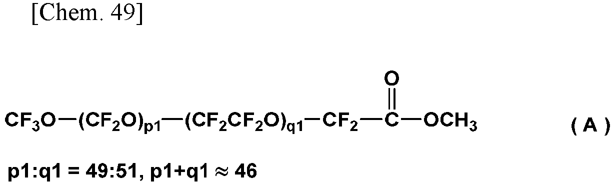 400 g of Asahiklin AC6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 193 g of a fluoropolyether-containing polymer represented by the following formula (B).

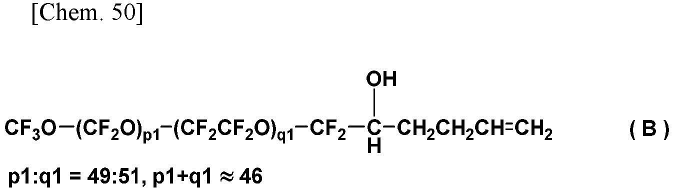

In a reactor, 100 g (2.3×10⁻² mol) of the compound represented by the formula (B) obtained above, 11 g (9.2× 10⁻² mol) of allyl bromide and 0.17 g (4.6× 10⁻⁴ mol) of tetrabutylammonium iodide were mixed. Subsequently, 18 g (1.4×10⁻¹ mol) of 30 mass% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 97 g of a fluoropolyether-containing polymer represented by the following formula (C).

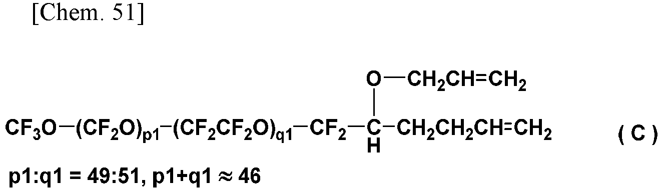

In a reactor, 80 g (1.8×10⁻² mol) of the compound represented by the formula (C) obtained above, 120 g of 1,3-bis(trifluoromethyl)benzene, 43 g (1.8×10⁻¹ mol) of 2,4,6,8-tetramethylcyclotetrasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (D).

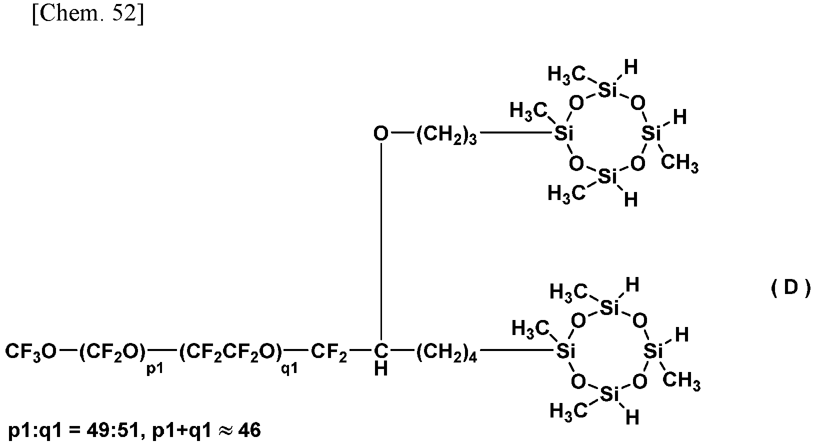

### [Example 2]

In a reactor, 80 g (1.8×10⁻² mol) of the compound represented by the following formula (C): 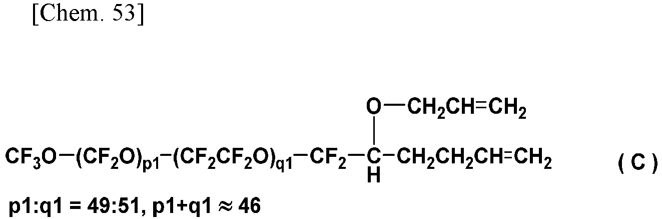 obtained in the same manner as in Example 1, 120 g of 1,3-bis(trifluoromethyl)benzene, 54 g (1.8×10⁻¹ mol) of 2,4,6,8,10-pentamethylcyclopentasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (E).

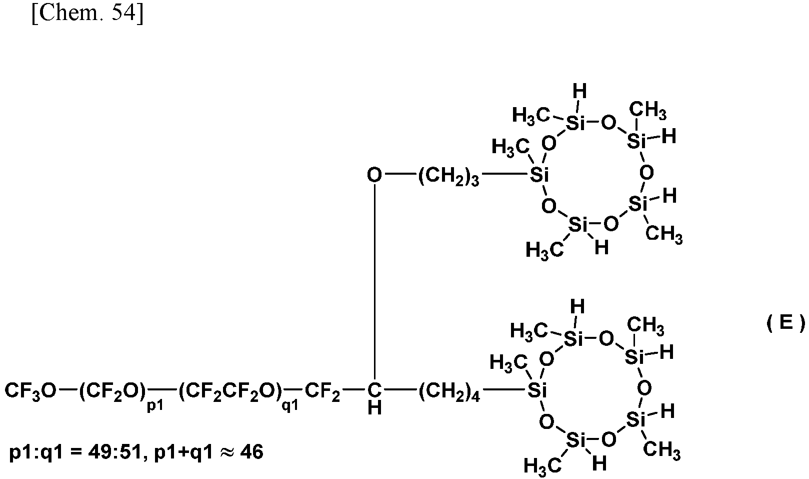

### [Example 3]

In a reactor, 80 g (1.8×10⁻² mol) of the compound represented by the following formula (C): 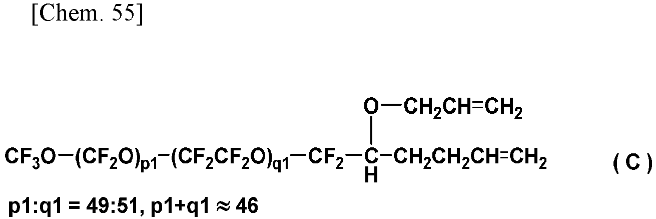 obtained in the same manner as in Example 1, 120 g of 1,3-bis(trifluoromethyl)benzene, 48 g (1.8×10⁻¹ mol) of methyltris(dimethylsiloxy)silane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (F).

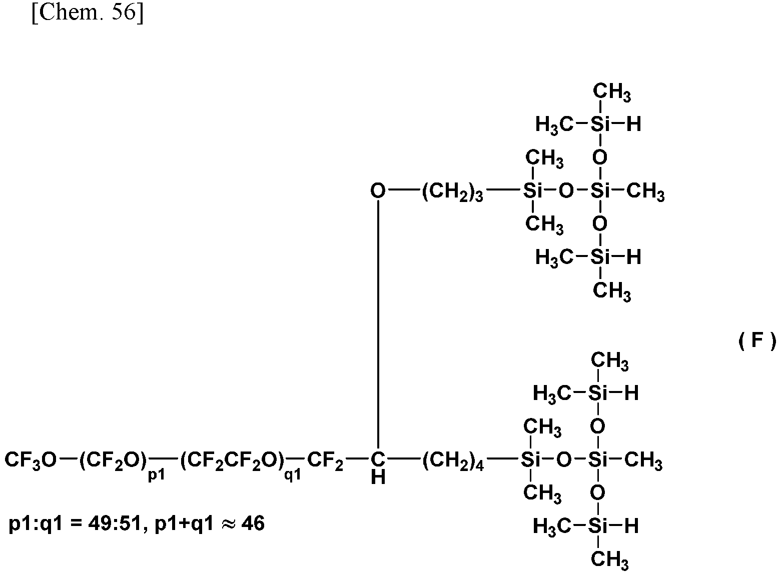

### [Example 4]

In a reactor, 80 g (1.8×10⁻² mol) of the compound represented by the following formula (C): 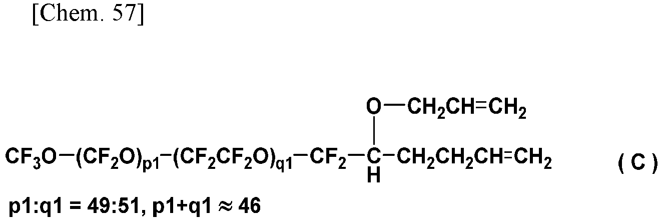 obtained in the same manner as in Example 1, 120 g of 1,3-bis(trifluoromethyl)benzene, 59 g (1.8×10⁻¹ mol) of tetrakis(dimethylsiloxy)silane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (G).

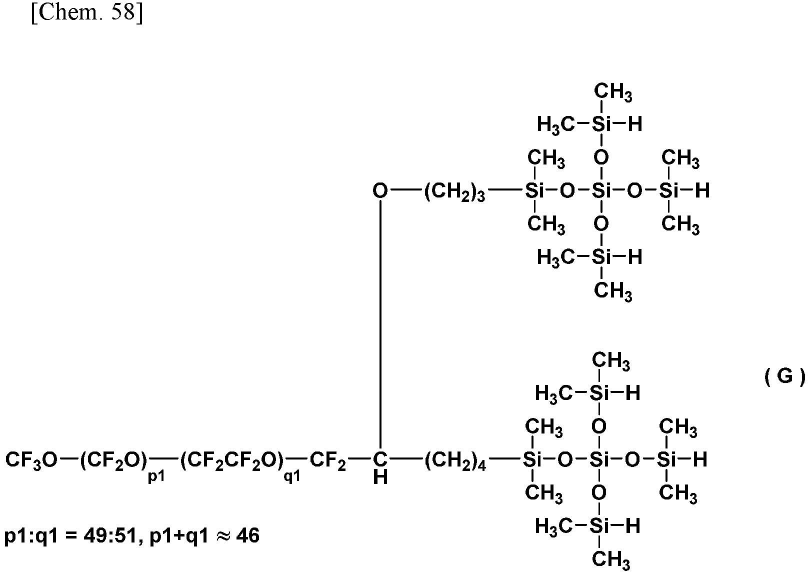

### [Example 5]

A reactor was charged with 132 ml of a 0.5 M THF solution of 3-butenylmagnesium bromide (6.6×10⁻² mol). With stirring, a mixture of 100 g (2.2×10⁻² mol) of a compound represented by the following formula (H): 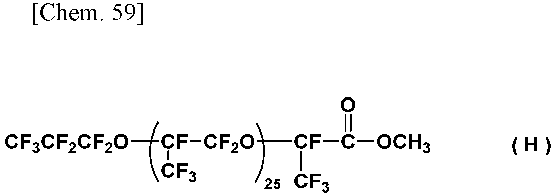 200 g of Asahiklin AC6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 96 g of a fluoropolyether-containing polymer represented by the following formula (I).

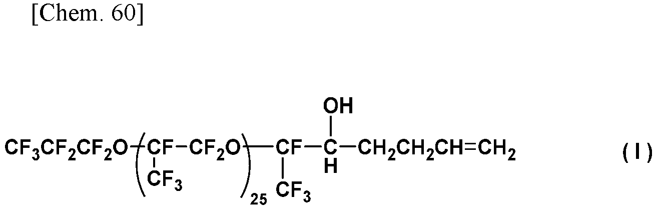

In a reactor, 20 g (4.4×10⁻³ mol) of the compound represented by the formula (I) obtained above, 2.2 g (1.8×10⁻² mol) of allyl bromide and 0.03 g (8.1×10⁻⁵ mol) of tetrabutylammonium iodide were mixed. Subsequently, 3.5 g (2.6×10⁻² mol) of 30 mass% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 19 g of a fluoropolyether-containing polymer represented by the following formula (J).

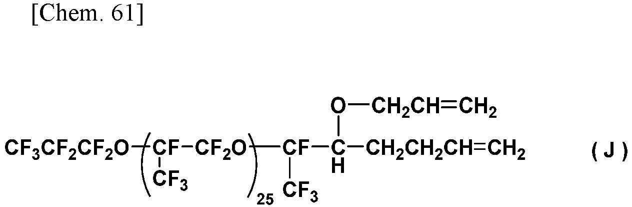

In a reactor, 10 g (2.2×10⁻³ mol) of the compound represented by the formula (J) obtained above, 15 g of 1,3-bis(trifluoromethyl)benzene, 6.6 g (2.2×10⁻² mol) of 2,4,6,8,10-pentamethylcyclopentasiloxane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 11 g of a fluoropolyether-containing polymer represented by the following formula (K).

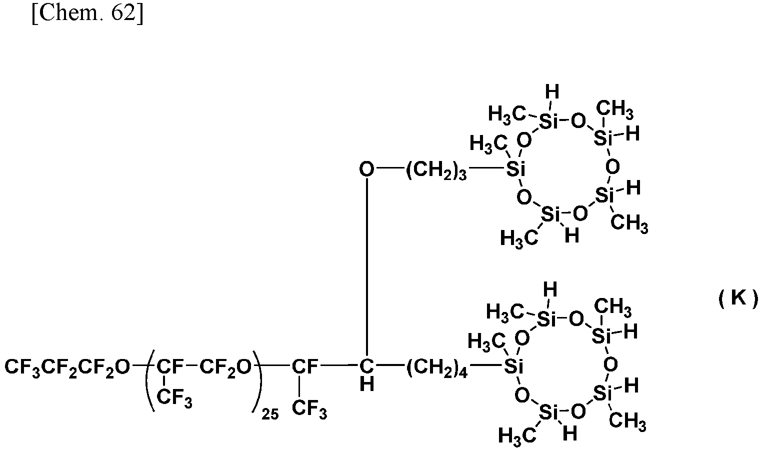

### [Example 6]

A reactor was charged with 132 ml of a 0.5 M THF solution of 3-butenylmagnesium bromide (6.6×10⁻² mol). With stirring, a mixture of 100 g (2.2×10⁻² mol) of a compound represented by the following formula (L): 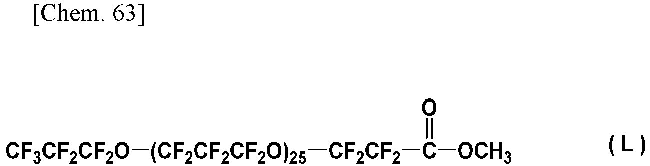 200 g of Asahiklin AC6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 96 g of a fluoropolyether-containing polymer represented by the following formula (M).

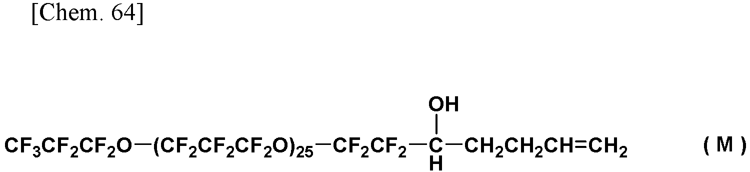

In a reactor, 20 g (4.4×10⁻³ mol) of the compound represented by the formula (M) obtained above, 2.2 g (1.8×10⁻² mol) of allyl bromide and 0.03 g (8.1×10⁻⁵ mol) of tetrabutylammonium iodide were mixed. Subsequently, 3.5 g (2.6×10⁻² mol) of 30 mass% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 19 g of a fluoropolyether-containing polymer represented by the following formula (N).

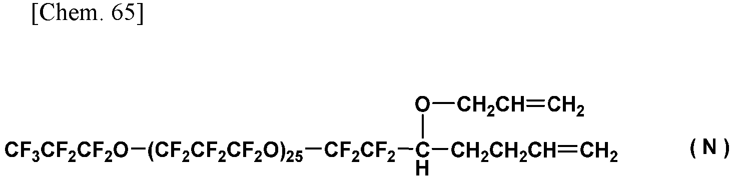

In a reactor, 10 g (2.2×10⁻³ mol) of the compound represented by the formula (N) obtained above, 15 g of 1,3-bis(trifluoromethyl)benzene, 6.6 g (2.2×10⁻² mol) of 2,4,6,8,10-pentamethylcyclopentasiloxane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 12 g of a fluoropolyether-containing polymer represented by the following formula (O).

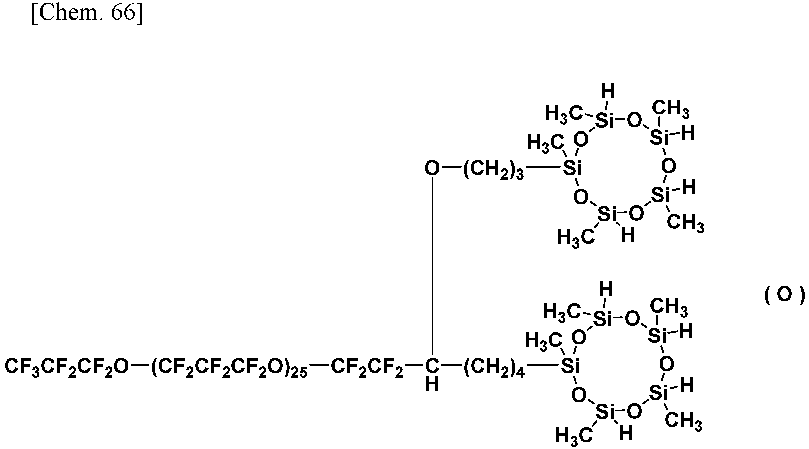

### [Example 7]

A reactor was charged with 126 ml of a 0.5 M THF solution of 3-butenylmagnesium bromide (6.3×10⁻² mol). With stirring, a mixture of 100 g (2.1×10⁻² mol) of a compound represented by the following formula (P): 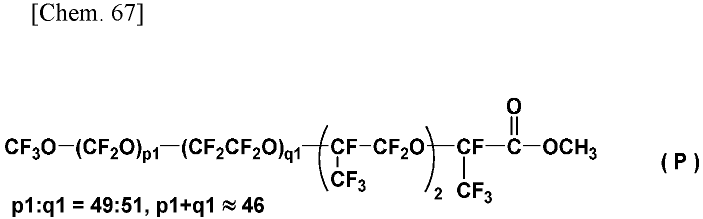 200 g of Asahiklin AC6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 96 g of a fluoropolyether-containing polymer represented by the following formula (Q).

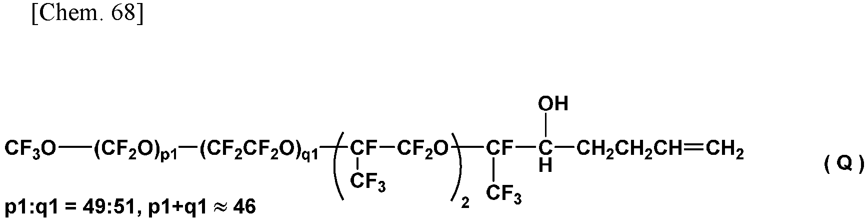

In a reactor, 20 g (4.2×10⁻³ mol) of the compound represented by the formula (Q) obtained above, 2.1 g (1.7×10⁻² mol) of allyl bromide and 0.03 g (8.1×10⁻⁵ mol) of tetrabutylammonium iodide were mixed. Subsequently, 3.5 g (2.6×10⁻² mol) of 30 mass% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 19 g of a fluoropolyether-containing polymer represented by the following formula (R).

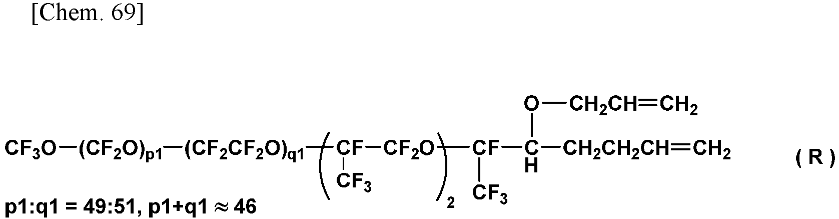

In a reactor, 10 g (2.1×10⁻³ mol) of the compound represented by the formula (R) obtained above, 10 g of 1,3-bis(trifluoromethyl)benzene, 6.3 g (2.1×10⁻² mol) of 2,4,6,8,10-pentamethylcyclopentasiloxane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 9.7 g of a fluoropolyether-containing polymer represented by the following formula (S).

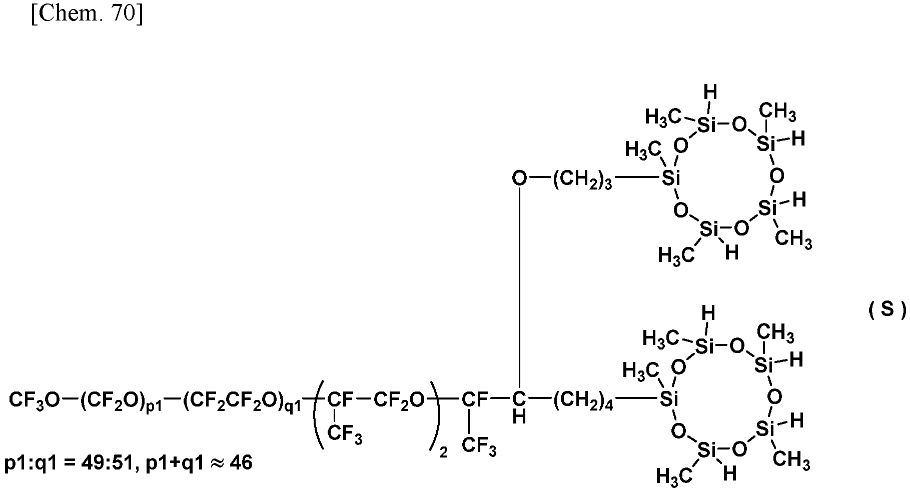

### [Example 8]

A reactor was charged with 126 ml of a 0.5 M THF solution of 3-butenylmagnesium bromide (6.3×10⁻² mol). With stirring, a mixture of 100 g (2.1×10⁻² mol) of a compound represented by the following formula (T): 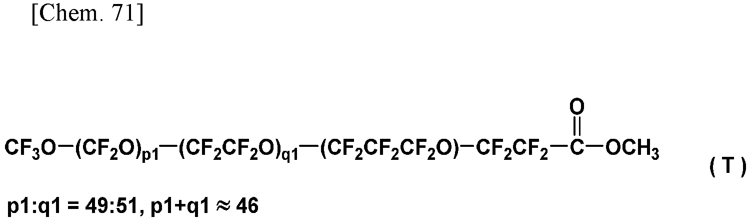 200 g of Asahiklin AC6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 96 g of a fluoropolyether-containing polymer represented by the following formula (U).

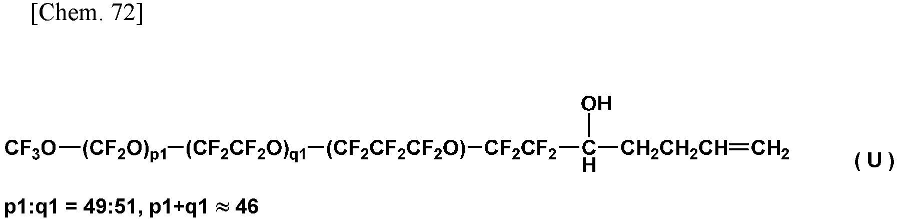

In a reactor, 20 g (4.2×10⁻³ mol) of the compound represented by the formula (U) obtained above, 2.1 g (1.7×10⁻² mol) of allyl bromide and 0.03 g (8.1×10⁻⁵ mol) of tetrabutylammonium iodide were mixed. Subsequently, 3.4 g (2.5×10⁻² mol) of 30 mass% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 19 g of a fluoropolyether-containing polymer represented by the following formula (V).

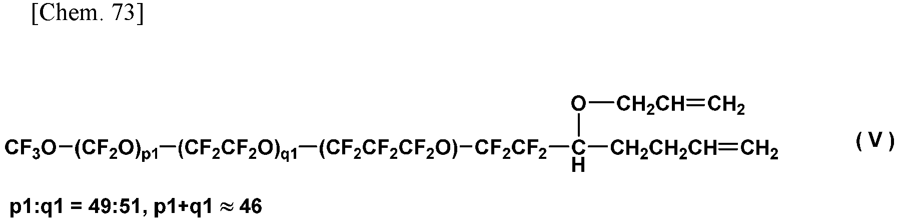

In a reactor, 10 g (2.1×10⁻³ mol) of the compound represented by the formula (V) obtained above, 10 g of 1,3-bis(trifluoromethyl)benzene, 6.3 g (2.1×10⁻² mol) of 2,4,6,8,10-pentamethylcyclopentasiloxane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 9.7 g of a fluoropolyether-containing polymer represented by the following formula (W).

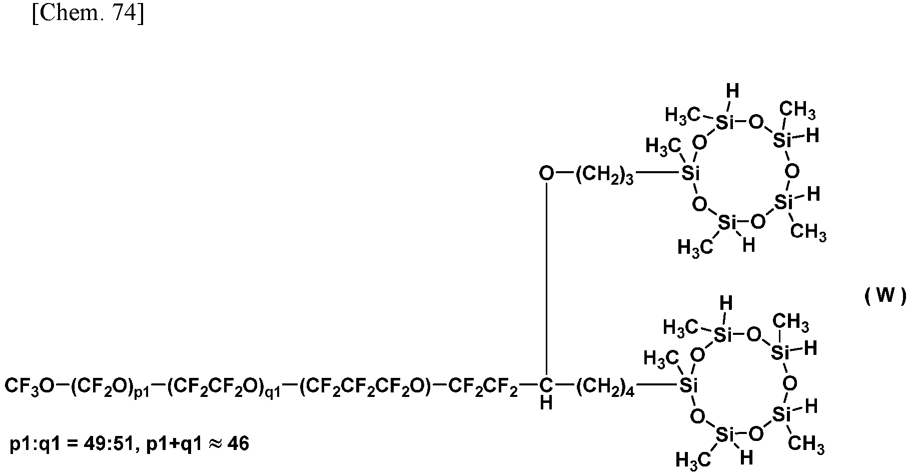

### [Example 9]

A reactor was charged with 282 ml of a 0.5 M THF solution of 3-butenylmagnesium bromide (1.4×10⁻¹ mol). With stirring, a mixture of 100 g (2.4×10⁻² mol) of a compound represented by the following formula (X): 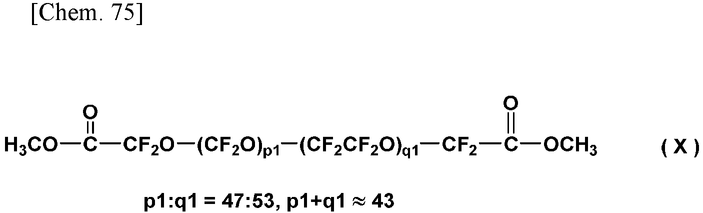 200 g of Asahiklin AC6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 94 g of a fluoropolyether-containing polymer represented by the following formula (Y).

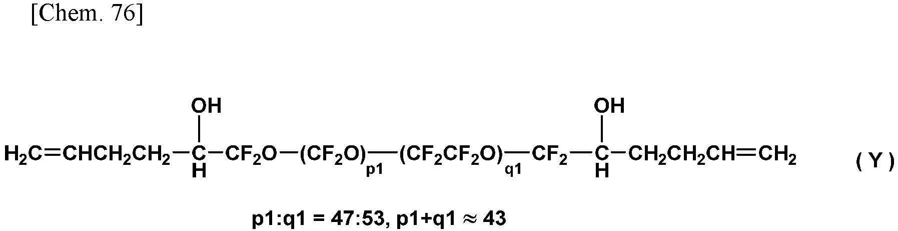

In a reactor, 20 g (4.7×10⁻³ mol) of the compound represented by the formula (Y) obtained above, 4.6 g (3.8×10⁻² mol) of allyl bromide and 0.07 g (1.9×10⁻⁴ mol) of tetrabutylammonium iodide were mixed. Subsequently, 7.5 g (5.6×10⁻² mol) of 30 mass% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 21 g of a fluoropolyether-containing polymer represented by the following formula (Z).

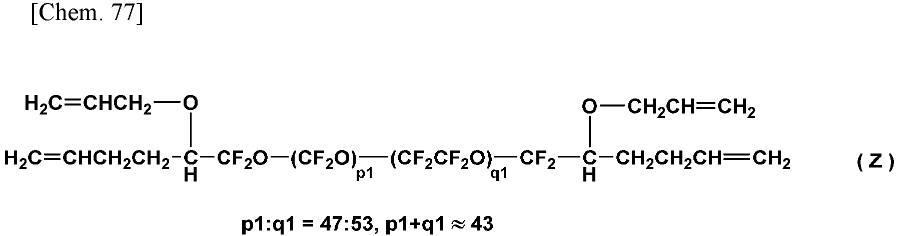

In a reactor, 20 g (4.6×10⁻³ mol) of the compound represented by the formula (Z) obtained above, 30 g of 1,3-bis(trifluoromethyl)benzene, 22 g (9.2×10⁻² mol) of 2,4,6,8-tetramethylcyclotetrasiloxane, and 4.8×10⁻² g of a toluene solution of platinum-1,3-divinyl-tetramethyldisiloxane complex (chloroplatinic acid/vinyl siloxane complex) (containing 1.4×10⁻⁷ mol of Pt) were mixed. The solution was aged at 80°C for 24 hours. Thereafter, the solvent and unreacted reactants were distilled off in vacuum, obtaining 22 g of a fluoropolyether-containing polymer represented by the following formula (a).

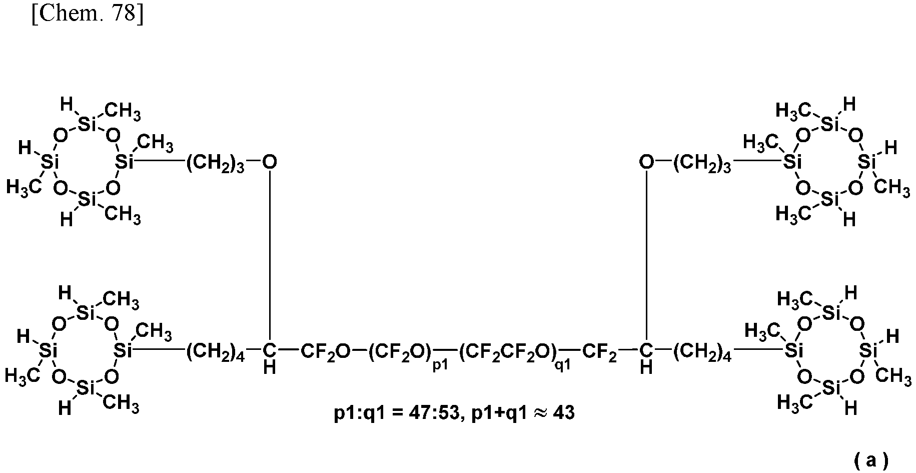

### [Example 10]

In a reactor, 20 g (4.6×10⁻³ mol) of the compound represented by the following formula (Z): 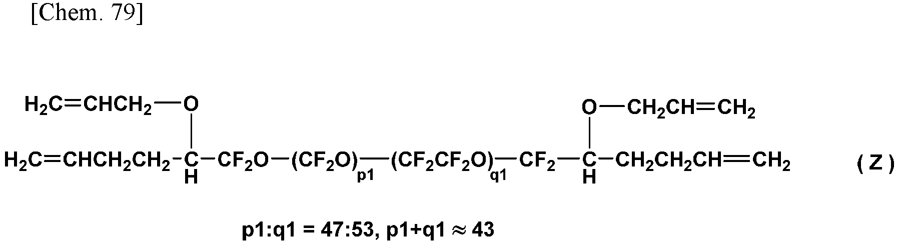 obtained in the same manner as in Example 9, 30 g of 1,3-bis(trifluoromethyl)benzene, 28 g (9.2×10⁻² mol) of 2,4,6,8,10-pentamethylcyclopentasiloxane, and 4.8×10⁻² g of a toluene solution of platinum-1,3-divinyl-tetramethyldisiloxane complex (chloroplatinic acid/vinyl siloxane complex) (containing 1.4×10⁻⁷ mol of Pt) were mixed. The solution was aged at 80°C for 24 hours. Thereafter, the solvent and unreacted reactants were distilled off in vacuum, obtaining 18 g of a fluoropolyether-containing polymer represented by the following formula (b).

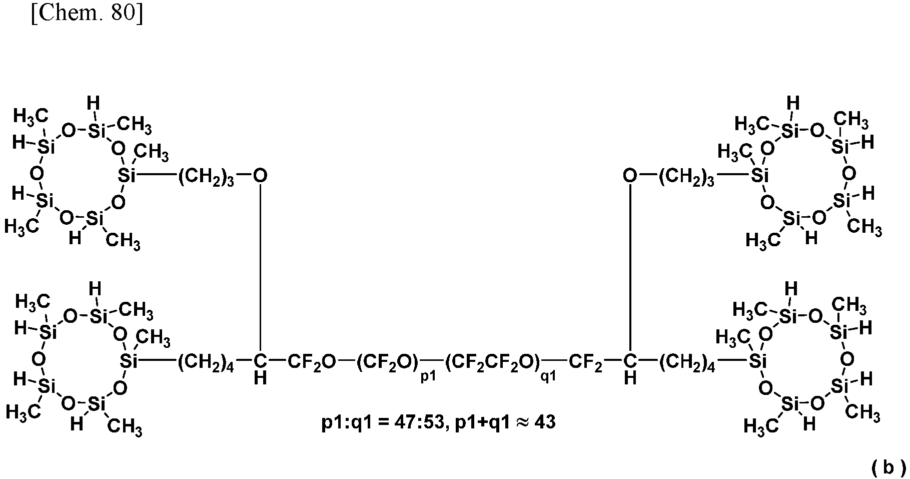

## Claims

1. A fluoropolyether-containing polymer having the following general formula (1): 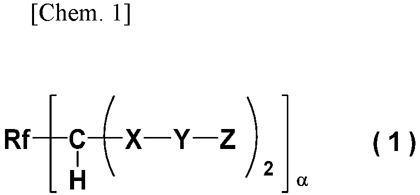 wherein Rf is a monovalent or divalent fluoropolyether-containing polymer residue, X is independently a single bond or a divalent heteroatom, Y is independently a C₁-C₂₀ divalent hydrocarbon group which may contain one or more selected from an oxygen atom, a nitrogen atom, a silicon atom, and a sulfur atom, Z is independently a monovalent organopolysiloxane residue having at least one silicon-hydrogen bond (SiH group) at an end, and may form a cyclic structure, and α is 1 or 2.

2. The fluoropolyether-containing polymer of claim 1, wherein α in the formula (1) is 1, and Rf is a monovalent fluoropolyether group having the following general formula (2): 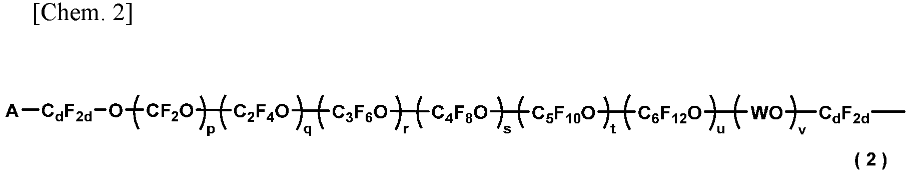 wherein A is a hydrogen atom, a fluorine atom, or an unsubstituted or fluorine-substituted C₁-C₂₀ monovalent hydrocarbon group, W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.

3. The fluoropolyether-containing polymer of claim 1, wherein α in the formula (1) is 2, and Rf is a divalent fluoropolyether group having the following general formula (3): 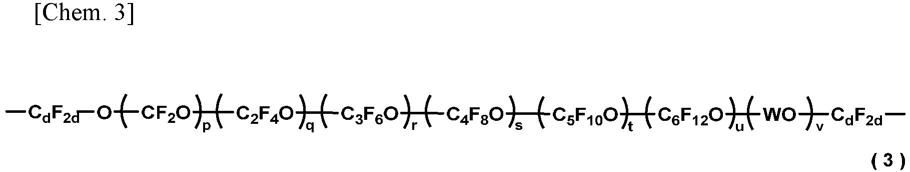 wherein W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.

4. The fluoropolyether-containing polymer of claim 1, wherein in the formula (1), two X's are present at one end of the molecular chain when α = 1, and two X's are present at each of both ends of the molecular chain (four X's in the molecule) when α = 2; one X is an oxygen atom, and the other X is a single bond at each end.

5. The fluoropolyether-containing polymer of claim 1, wherein in the formula (1), Y is independently a C₂-C₁₀ alkylene group, or a C₂-C₁₀ alkylene group containing a C₆-C₈ arylene group.

6. The fluoropolyether-containing polymer of claim 1, wherein in the formula (1), Z is a linear monovalent organopolysiloxane residue of 2 to 10 silicon atoms having 1 to 9 silicon-hydrogen bonds (SiH groups) at an end or a branched or cyclic monovalent organopolysiloxane residue of 3 to 10 silicon atoms having 1 to 9 silicon-hydrogen bonds (SiH groups) at an end.

7. The fluoropolyether-containing polymer of claim 1, wherein in the formula (1), Z has any one of the following formulae: 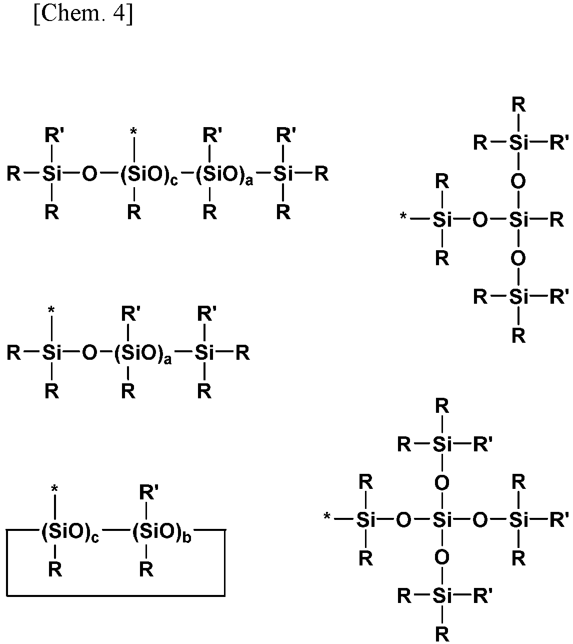 wherein * is a bond bonded to Y in the formula (1), R is independently a C₁-C₂₀ monovalent hydrocarbon group, R' is independently a hydrogen atom or a C₁-C₂₀ monovalent hydrocarbon group, at least one R' is a hydrogen atom, a is an integer of 0 to 6, b is an integer of 2 to 9, c is 1, and individual repeat units shown in parentheses with a and c may be randomly bonded.

8. The fluoropolyether-containing polymer of claim 1, wherein the polymer having the formula (1) is selected from polymers having the following general formulae (4) and (5): 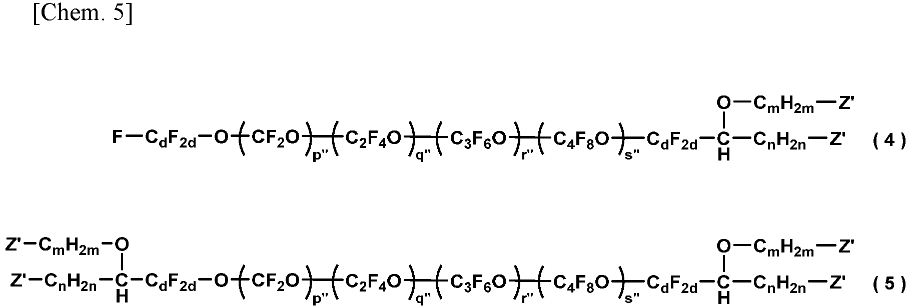 wherein d is independently an integer of 1 to 3 for each unit, p", q", r", and s" are each an integer of 0 to 100, the sum of p", q", r", and s" in each formula is 3 to 100, individual repeat units shown in parentheses with p", q", r", and s" may be randomly bonded, m and n are each independently an integer of 2 to 10 for each unit, each of these units may be linear or branched, and Z' independently has any one of the following formulae: 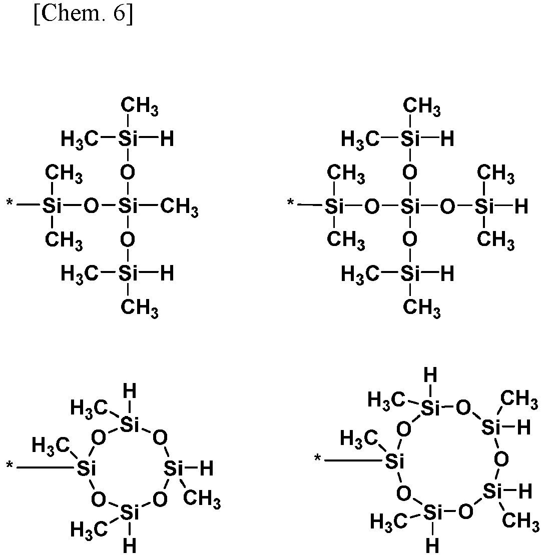 wherein * is a bond bonded to a terminal carbon atom in the formulae (4) and (5).
